# EUROPEAN PATENT APPLICATION

(11) **EP 4 607 846 A1**
(43) Date of publication of application: **27.08.2025**
(21) Application number: 23880091.6
(22) Date of filing: 06.10.2023
(51) Int. Cl.: H04L 9/32

(54) **DIRECT C2 AUTHORIZATION**

(30) Priority: 18.10.2022 US 202263417283 P; 06.02.2023 US 202363443683 P
(71) Applicant: LG Electronics Inc., Yeongdeungpo-gu Seoul 07336 (KR)
(72) Inventor: KIM, Laeyoung, Seoul 06772 (KR)
(74) Representative: Plasseraud IP
(86) International application number: PCT/KR2023/015402
(87) International publication number: WO 2024/085512

(57) **Abstract**

Disclosed is a method for an SMF to perform communication. The method may comprise the steps of: receiving authorization request information for direct C2 communication from a UE; transmitting an authorization request message to a USS; receiving an application layer ID of a UAV-C from the USS; and transmitting the application layer ID of the UAV-C to the UE.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

UncrewedAerial System (UAS) is being discussed in 5G. Command and Control (C2) communication can be performed between the Uncrewed Aerial Vehicle (UAV) and the UAV-Controller (UAV-C) based on the PC5 interface. However, in the prior art, a specific method for performing authorization to perform such C2 communication has not been discussed.

### DISCLOSURE

### TECHNICAL SOLUTION

In one aspect, it provides a method for SMFs to perform communication. The method may include: receiving authorization request information for C2 communication directly from the UE; transmitting the authorization request message to the USS; receiving an application layer ID of the UAV-C from the USS; and transmitting the application layer ID of the UAV-C to the UE.

In another aspect, an apparatus implementing the method is provided.

In one aspect, a method for performing a communication by a UE is provided. The method may include: transmitting authorization request information for direct C2 communication to an SMF; and receiving an application layer ID of the UAV-C from the SMF.

In another aspect, an apparatus implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 illustrates an example architecture of a logical 5GS and EPS for a UAV.
FIGS. 8a and 8b illustrate a procedure according to the first example in the first example of the present disclosure.
FIGS. 9a and 9b illustrate a procedure according to the second example in the first example of the present disclosure.
FIG. 10 illustrates a procedure according to the third example in the first example of the present disclosure.
FIG. 11 illustrates a procedure according to the fourth example in the first example of the present disclosure.
FIG. 12 illustrates a procedure for establishing a layer-2 link over a PC5 reference point, according to one embodiment of the present disclosure.
FIG. 13 illustrates an example procedure for establishing a PDU session for C2 communication, according to one embodiment of the present disclosure.
FIG. 14 is an example of a PDN connection for C2 authorization, according to one embodiment of the present disclosure.
FIG. 15 illustrates an example of a procedure according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMAmay be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

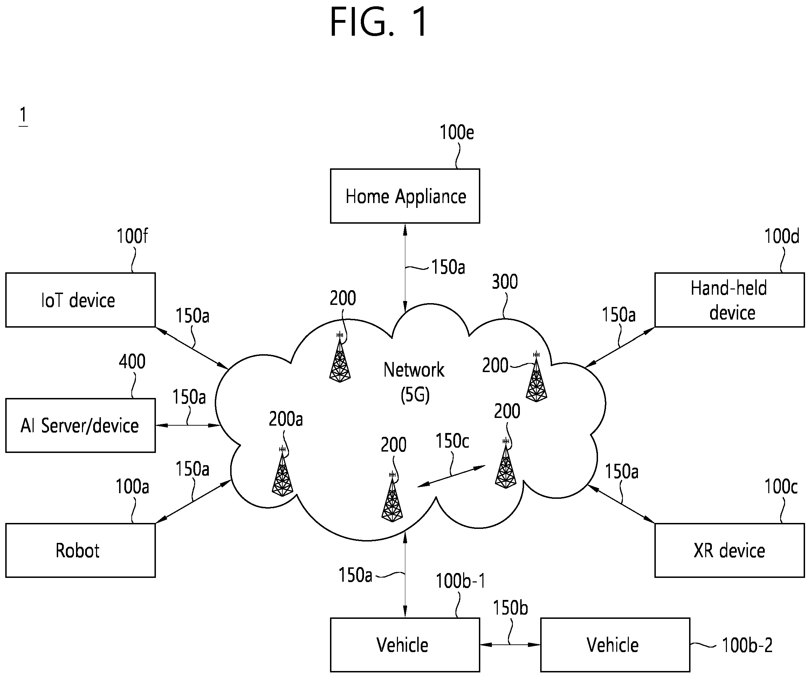

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the-mentioned names. Additionally and/or alternatively, the radio communication technologies implemented in the wireless devices in the present disclosure may include at least one of ZigBee, Bluetooth, and/or LPWAN which take into account low-power communication, and may not be limited to the-mentioned names. For example, ZigBee technology may generate Personal Area Networks (PANs) associated with small/low-power digital communication based on various specifications such as IEEE 802.15.4 and may be called various names.

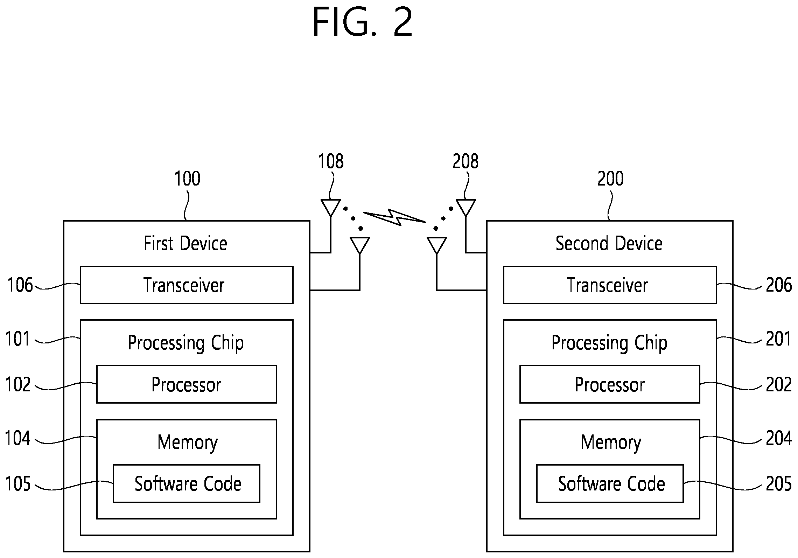

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

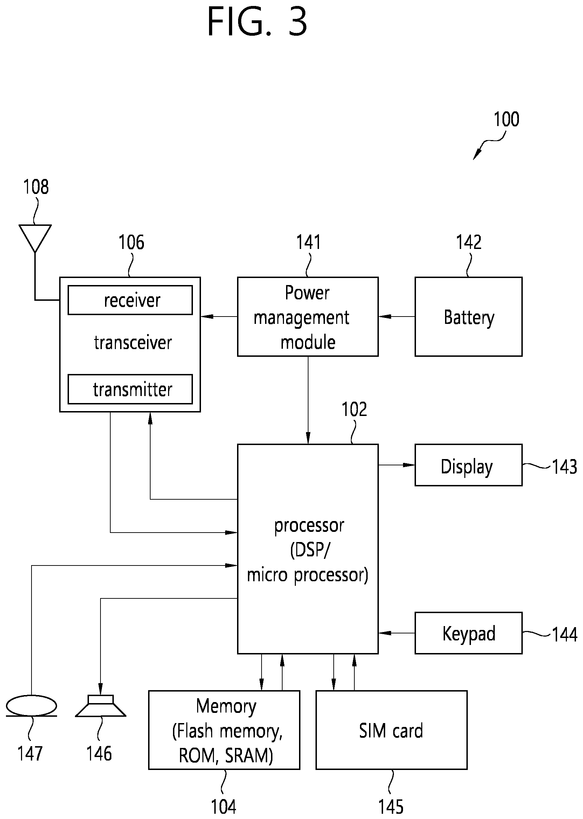

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

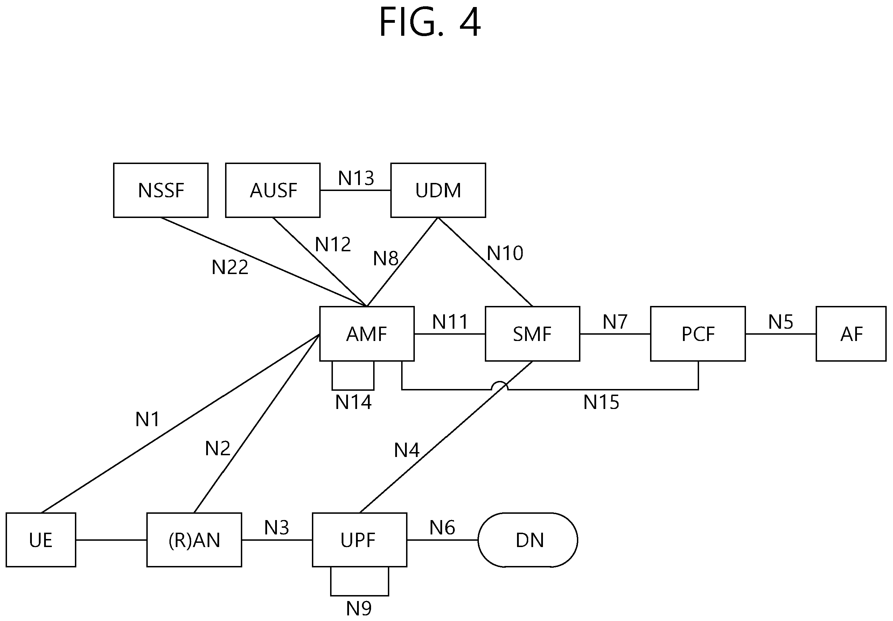

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio)Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

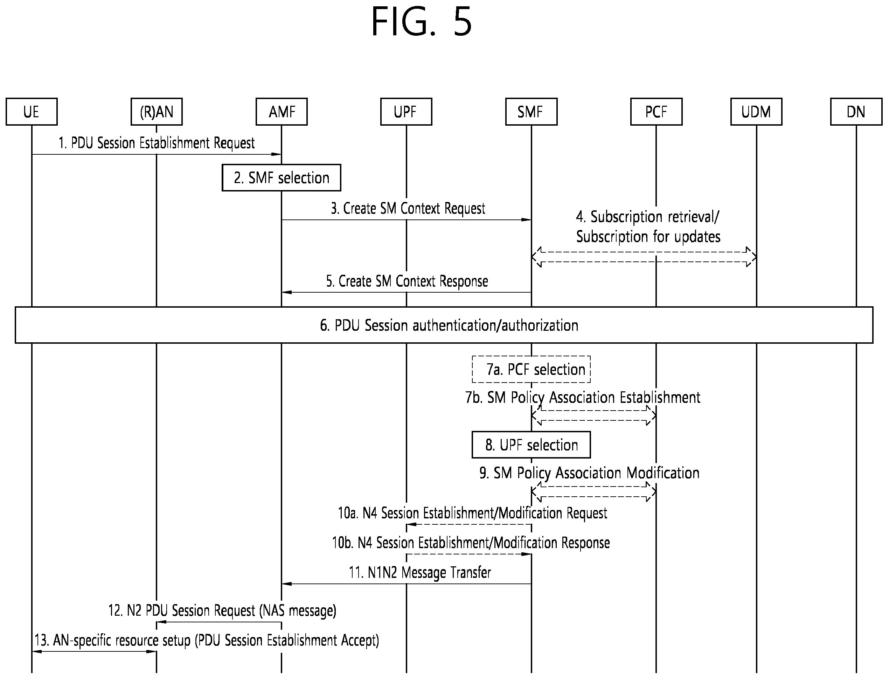

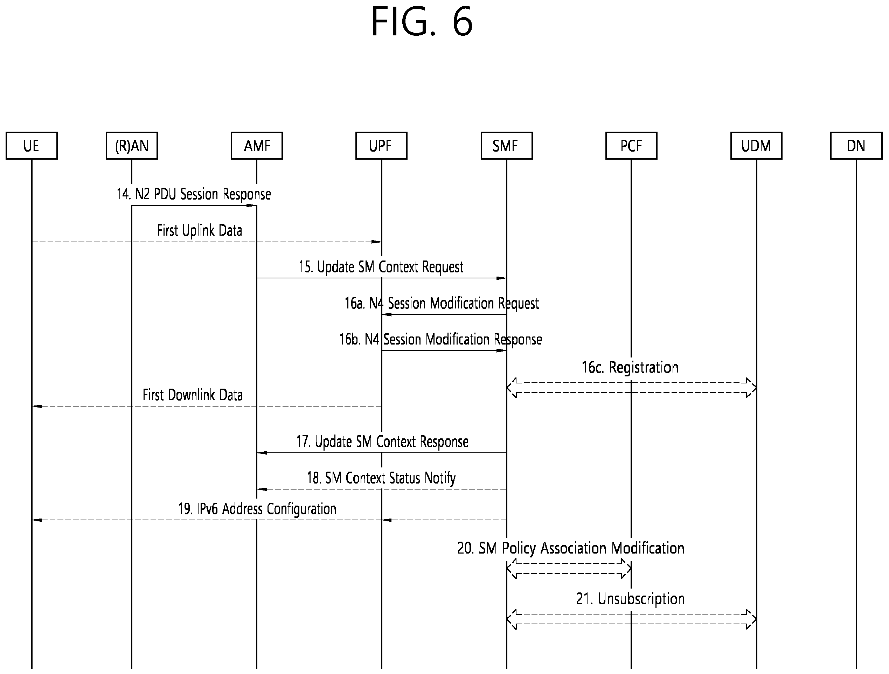

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a differentAMF, theAMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN,
- the SMF ID corresponding to the PDU session ID belongs to the HPLMN,

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container including the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

TheAMF may include a PCF ID in the Nsmf_PDUSession _CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2Message ransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message including the PDU Session Establishment Reject message to the UE. In this case, steps 12-17 are skipped.

(12) Step 12: The AMF sends the NAS message including PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <UAS (Uncrewed Aerial System)>

In 5G, support for Uncrewed Aerial Systems (UAS) is being discussed. A UAS can consist of one or more unmanned aerial vehicles (UAVs) and one unmanned aerial controller (UAV-C). The UAVs may be controlled by the UAV Controller over a Command and Control (C2) link in a 3GPP mobile network or a non-3GPP mobile network.

In the present disclosure, C2 communication may refer to Command and Control (C2) Communication. C2 communication may refer to a user plane link from a UAV controller or Uncrewed Aircraft Systems Traffic Management (UTM) to a UAV to deliver messages including command and control information for UAV operations, or from a UAV to report telemetry data to a UAV controller or UTM.

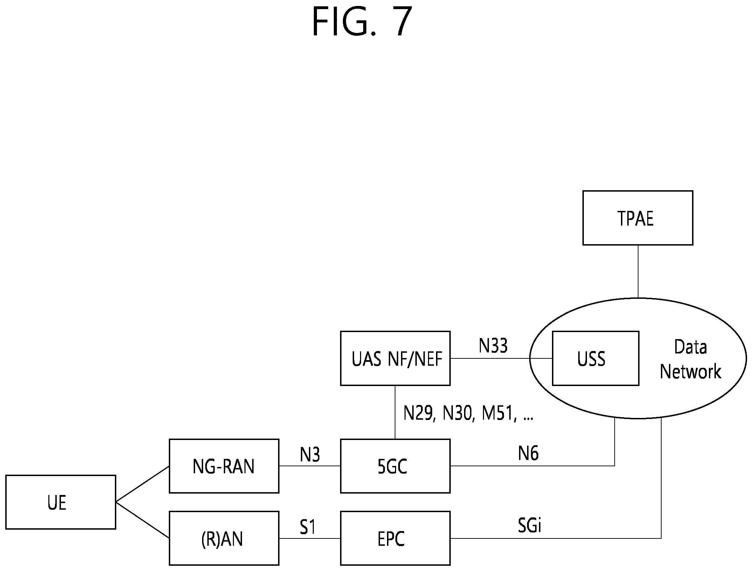

For the management of the UAS, the UAS Service Supplier (USS)/UAS Traffic Management (UTM) and the UAV may exchange application data traffic over the 3GPP mobile network. The UAV may be considered as a UE. For example, the example in Figure 7 below illustrates a logical 5GS and EPS architecture for a UAV. Further details can be found in TS 23.256 V17.0.0.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 7** **illustrates an example architecture of a logical 5GS and EPS for a UAV.**

In order to receive connectivity services from the network, the UAV must perform an authorization procedure through the UAV USS authentication and authorization procedure (UUAA). For example, depending on the network operator's policy, authorization may be performed in the following ways

1) UUAA can be performed during the process of the UAV registering to the network: For example, the UAV may have an Aerial UE subscription in its Access and Mobility Subscription data. If the registration request message sent by the UAV includes the CAA-Level UAV ID, UUAA may be performed (this may be referred to as UUAA-MM). If UUAA-MM is not performed, the UAV may perform UUAA during the PDU session creation process.

2) The UAV may perform UUAA during the PDU session generation process of the DNN for the UAV service (PDN connection in case of EPS) (this may be referred to as UUAA-SM): For 5GS, UUAA-SM may be initiated by the SMF when the UAV provides the CAA-Level UAV ID in the PDU session creation request message. For EPS, it may be initiated by SMF+PGW-C when the UAV provides the CAA-Level UAV ID to the ESM message container.

UAV communications can be divided into USS communications and C2 communications between the UAV and the USS. USS communication can be user plane data transmission except C2 communication. The PDU Session/PDN connection for C2 communication and the PDU Session/PDN connection for USS communication may be used in common or separately, e.g., the PDU Session/PDN connection for C2 communication and the PDU Session/PDN connection for USS communication may be the same or different.

UAS Network Function is supported by Network Exposure Function (NEF) or Service Capability Exposure Function (SCEF)+NEF, which can be used for external exposure of services to USS. The UAS-NF can leverage the existing exposure services of NEF/SCEF for operations such as authentication/authorization of UAVs, flight authorization, revocation of UAV-UAVC pairing authorization and related operations, location reporting, and control of QoS/traffic filtering for C2 communication. The UAS NF may store the results of the UUAA-MM process and the results of the UUAA-SM process. In addition, in order to support re-authentication at the request of the USS, the UAS NF may store whether the re-authentication should be requested to the AMF or the SMF/SMF+PGW-C, and may store the address of the AMF or SMF/SMF+PGW-C currently providing the service.

The USS may initiate the Re-authentication process through the UAS NF at any time after the UUAA process has ended. UUAA re-authentication can be performed via SMF (UUAA-SM) or AMF (UUAA-MM) depending on the network settings. The result of the re-authentication may be communicated from the USS through the UAS NF to the UE via SMF (UUAA-SM) or AMF (UUAA-MM).

Additional measures to support Uncrewed Aerial System (UAS) services on 5GS are being discussed. 3GPP TR 23.700-58 v1.0.0 covers the following issues

For example, there is an issue with Transport C2 communication over PC5 interface.

This issue focuses on the transmission of C2 communications over PC5 in the 3GPP system. This includes studying how to enable direct C2 communication between the UAV and the UAV controller. The following aspects shall be considered
- Whether the PC5 can support C2 communication between the UAV and the UAV controller (UAV-C);
- whether and what architectural modifications are required with respect to solutions that currently use the PC5 (e.g., Proximity based Services (ProSe), Cellular Vehicle-to-Everything (C-V2X)):
- This includes studying both scenarios where both the drone and the UAV controller (UAV-C) are registered to 5GS and scenarios where the UAV controller (UAV-C) may not be registered to 5GS or may not have Uu capability;
- This includes studying both scenarios where the radio resources used by the PC5 are set and scheduled by the Mobile Network Operator (MNO) (during coverage operations) and scenarios where the radio resources used by the PC5 are "non-operator-managed";
- Whether and how existing PC5-based unicast communications can be reused and/or extended to carry C2 communications;
- How C2 communications over PC5 are established between the UAV and the UAV controller;
- how a UAV is authorized, and how is authorization revoked, to establish C2 communications directly via PC5 with a UAV controller in both in-coverage and out-of-coverage scenarios;
- Whether the UAV needs to discover the UAV controller or vice versa, and if so, how.

TR 23.700-58v1.0.0 contains the following conclusions on issues such as the example above.

UAVs participating in C2 communications via PC5 may or may not be able to Uu communicate with the network.

Only unicast mode C2 communication over PC5 is supported.

For C2 communication over PC5, the UAV-C may be pre-paired or dynamically paired.

Two types of authorization are supported for C2 communication over PC5:
- Authorization based on the provisioned policy of the UAV, similar to clause 5.1.3 of TS 23.304 V17.4.0.
- Authorization based on the C2 communication authorization procedure defined in AUTHORIZATION if the UAV is capable of Uu communication with the network.

The procedure for unicast mode 5G ProSe direct communication defined in clause 6.4.3 of TS 23.304 V17.4.0 shall be used as a basis for establishing C2 communication via PC5, based on the following enhancements and adaptations
- ProSe service information replaced by "C2 communication service"
- The C2 communication service identifier may be pre-set or derived from the CAA-level UAV ID.

Both UE-oriented and service-oriented unicast link establishment are supported as defined in clause 6.4.3.1 of TS 23.304 V17.4.0.

The following additional clarification may be applied to the above conclusion: the C2 communication authorization procedure via Uu as defined in TS 23.256 V17.4.0 may be used to establish C2 communication via PC5 between the UAV and the UAV-C (e.g., authorization with the USS/network). In this case, it may be clarified that the C2 communication over Uu authorization procedure must be performed before C2 communication over PC5. For example, the following additional clarifications may apply

Two types of authorization are supported for C2 communication over the PC5
- Authorization based on the provisioned policy of the UAV similar to clause 5.1.3 of TS 23.304 V17.4.0.
- Authorization based on the C2 communication authorization procedure defined in TS 23.256 V17.4.0 if the UAV is capable of Uu communication with the network. In this case, the UAV UE shall perform C2 communication authorization according to the procedure defined in TS 23.256 V17.4.0 before initiating direct UAV to UAV-C communication via PC5.

The C2 communication authorization procedure over Uu as defined in TS 23.256 V17.4.0 may fail. In this case, it is not clear whether the UAV UE should be allowed to perform C2 communication through the UAV-C and PC5. Furthermore, if the UAV UE should not perform C2 communication through the UAV-C and PC5, it is not clear how this should be handled (e.g., authorization or C2 communication).

It is also possible for the C2 connection through Uu to be revoked by the USS or the network. In this case, it is not clear whether the UAV UE should be allowed to perform C2 communication through the UAV-C and PC5. Furthermore, if the UAV UE should not be allowed to perform C2 communication through the UAV-C and PC5, it is not clear how to handle this (e.g., authorization or C2 communication).

Therefore, a solution to this problem is needed.

In addition, it may be necessary to provide the UE with the option to perform C2 communication over PC5 using Uu connection or to set the UE to perform C2 communication over PC5.

With regard to C2 communication, the following are defined in TS 23.256 V17.4.0

C2 Communication can mean Command and Control (C2) Communication. C2 Communication may mean a user plane link from the UAV Controller or Uncrewed Aircraft Systems Traffic Management (UTM) to the UAV to deliver messages including command and control information for UAV operations or to report telemetry data from the UAV to the UAV Controller or UTM.

The procedure for authorization of C2 communication over Uu can be found in TS 23.256 V17.4.0, clause 5.2.5 (Authorization for C2). And the procedure for revoking C2 connection via Uu can be found in TS 23.256 V17.4.0, clause 5.2.9 (Revocation of C2 Connectivity).

An approach to supporting C2 communication using a PC5 interface as proposed in the disclosure herein may comprise a combination of one or more of the following various examples of actions/configurations/steps

In this specification, the terms C2 communication, C2 connection, C2 connectivity, and C2 may be used interchangeably, i.e., C2 communication, C2 connection, C2 connectivity, and C2 may all be used interchangeably.

In the present disclosure, "performing a C2 communication" may be interpreted as performing a C2 connection establishment, or may be interpreted as an operation that includes performing a C2 connection establishment. The establishment of a C2 connection over a PC5 interface may refer to the Layer-2 link establishment, e.g., unicast link establishment operation in TS 23.287 V17.4.0, TS 23.304 V17.4.0.

The terms User Equipment (UE) and terminal may be used interchangeably in this specification.

The terms PC5, PC5 interface, PC5 reference point, and "PC5-based" may be used interchangeably in this specification.

In the present disclosure, the terms Uu, Uu interface, Uu reference point, and Uu reference point may be used interchangeably.

In the present disclosure, SMF may refer to SMF+PGW-C in the EPS.

In the following, the disclosure of this specification describes what is proposed in the disclosure and may omit descriptions of configurations that are identical to prior art. For UAS related operations and procedures, TS 23.256 V17.4.0 is the default reference. In addition, for PC5-related operations and procedures, TS 23.287 V17.4.0, TS 24.587, TS 23.304 V17.4.0, TS 24.554, etc. are referred to by default.

The example of supporting C2 communication using the PC5 interface described in this specification may be extended/variated and applied to other services (e.g., ProSe services, V2X services, etc.) as well as UAS services. In this case, the C2 communication/C2 connection as disclosed herein may be interpreted interchangeably as a communication/connection between two UEs.

If the C2 communication authorization (or authorization with the USS/network) via Uu fails or if the C2 communication authorization (or authorization with the USS/network) is revoked, the following example actions may be performed. For example, the UE may be provided with or set whether the SMF or USS is allowed to perform C2 communication via PC5. Alternatively, the UE may be informed or set whether the SMF or USS can perform C2 communication over PC5 using the Uu connection. If the USS performs these actions, the information or configurations provided by the USS may be passed to the UE via the SMF.

For example, if C2 communication authorization (or authorization with the USS/network) via Uu fails or C2 communication authorization (or authorization with the USS/network) is revoked, the following example actions may be performed. For example, the network may instruct or configure whether the UE is allowed to perform C2 communication via PC5. Alternatively, the network may provide or set to the UE whether the UE is allowed to perform C2 communication via PC5 using a Uu connection. Here, the UE may be assumed to be a UAV. However, this is for illustrative purposes only, and the UE may be a UAV-C, or the UE may be both a UAV and a UAV-C.

In the present disclosure, the operation of providing or setting to the UE whether C2 communication over PC5 can be performed using Uu connection may also be interpreted as the operation of providing or setting to the UE whether C2 communication over PC5 can be performed by the network.

### 1. the first example of the present disclosure

The first example of the present disclosure describes an example of setting an Authorization Policy/Parameter on a UE.

One or more of the following Authorization Policies/Parameters may be set on the UE. These Authorization Policies/Parameters may be set in various forms, including combinations, explicit, implicit, etc.
(a) information indicating/instructing that in order for the UE to perform C2 communication over the PC5 interface (or, prior to the UE performing C2 communication over the PC5 interface), the UE shall perform/precede C2 communication authorization (or authorization with the USS/network) via Uu.
(b) information indicating/indicating that the authorization of C2 communication via the Uu (or authorization with the USS/network) has failed (i.e. has not been successful), or information indicating/indicating that C2 communication should not be conducted via the PC5 interface. This may be interpreted to mean that if C2 communication authorization via Uu (or authorization with the USS/network) fails (i.e. is not successful), C2 communication via the PC5 interface is not allowed/authorized.
(c) information indicating/instructing that C2 communications can be conducted over the PC5 interface, or information indicating/indicating that C2 communications can be conducted over the PC5 interface if authorization for C2 communications through the Uu (or authorization with the USS/network) is successful. This may be interpreted to mean that if the C2 communication authorization via Uu (or authorization with the USS/network) is successful, C2 communication via the PC5 interface is allowed/authorized.
(d) information that indicates/instructs that C2 communications can be conducted over the PC5 interface, even if authorization for C2 communications through the Uu (or authorization with the USS/network) has failed (i.e., has not been successful). This may be interpreted to mean that C2 communication over the PC5 interface is permitted/authorized even if the C2 communication authorization via Uu (or authorization with the USS/network) fails (i.e., is not successful).
(e) information indicating/instructing that, once the Uu-based C2 connection is revoked, no C2 communication shall be performed over the PC5 interface. This may be interpreted to mean that if the C2 communication authorization via Uu (or authorization with the USS/network) is revoked, C2 communication via the PC5 interface is not allowed/authorized.
(f) information indicating/ instructing that C2 communication can be performed over the PC5 interface, even if the Uu-based C2 connection is revoked. This may be interpreted as allowing/authorizing C2 communication via the PC5 interface, even if the C2 communication authorization via Uu (or authorization with the USS/network) is revoked.
(g) information indicating/ instructing that C2 communication shall not be performed over the PC5 interface when the Uu-based C2 connection (or the PDU (Packet Data Unit or Protocol Data Unit) Session/ PDN (Packet Data Network) connection used for Uu-based C2 communication) is terminated. This may be interpreted to mean that C2 communication over the PC5 interface is not permitted/authorized if C2 communication over the Uu (or the PDU Session/PDN connection used for this purpose) has been terminated.
(h) Information indicating/instructing that C2 communication can be performed over the PC5 interface even if the Uu-based C2 connection (or PDU Session/PDN connection used for Uu-based C2 communication) is terminated. This may be interpreted as allowing/authorizing C2 communication over the PC5 interface even if the C2 communication over Uu (or the PDU Session/PDN connection used for it) is terminated.

It should be noted that the foregoing (a) to (h) may also be referred to as (a) information (or information (a)) and (h) information(or information (h)), respectively, in various examples of the present disclosure.

In the examples described above, the action of disconnecting the PDU Session/PDN connection used for Uu-based C2 communication can be interpreted as including the disconnection of the QoS Flow/Bearer used for Uu-based C2 communication.

The above Authorization Policy/Parameter settings may be set by one or more of the following methods: set in the UICC, set in the ME, set in the UE by the PCF, or set in the UE by the AF. Examples of the behaviour of making these settings can be found in clauses 5.1.1 and 6.2 of TS 23.287 V17.4.0.

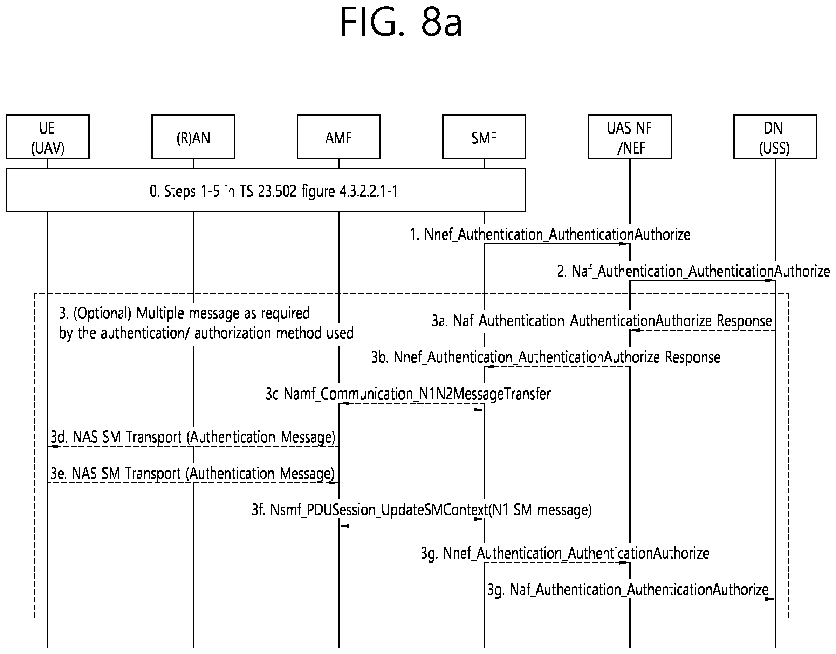

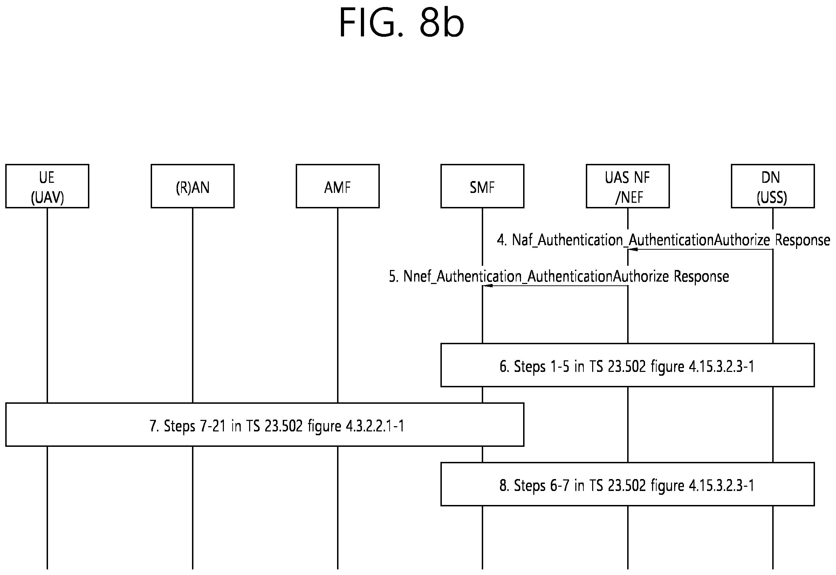

Hereinafter, with reference to the examples of FIGS. 8a and 8b, a first example in the first example of the present disclosure will be described.

The following examples are based on the content of clause 5.2.5.2.1 (C2 Authorization request during UUAA-SM procedure in 5GS) of TS 23.256 V17.4.0, and the following discussion focuses on what is proposed in the present disclosure. Note that clause 5.2.5.2.1 of TS 23.256 V17.4.0 above describes additions to clause 5.2.3.2 of TS 23.256 V17.4.0.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 8a** **and** **8b** **illustrate a procedure according to the first example in the first example of the present disclosure.**

The examples in FIG. 8a and FIG. 8b illustrate an example of UUAA being performed while the PDU session establishment procedure is performed.

The description of the behaviour described in clause 5.2.5.2.1 of TS 23.256 V17.4.0 is omitted.

Step 0. If the information in (a) above is configured in the UE, the UE may decide to perform the C2 communication authorization via Uu.

Step 7. Based on one or more of the information in (b), (c) and/or (d) and the result of the C2 authorization (success or failure), the UE may decide whether to perform C2 communication over the PC5 interface. For example, the following example behaviour may be performed:
- If the C2 authorization is successful, the UE may determine that it can perform C2 communication over the PC5 interface. The UE may make this decision even if information (c) above is set or not set.
- In case of C2 authorization failure, if information (b) above is set, the UE may determine that it cannot perform C2 communication over the PC5 interface. Even if information (b) above is not set, if information (a) above is set, the UE may determine that it is not allowed to perform C2 communication over the PC5 interface if C2 authorization fails.
- If the C2 authorization fails, the UE may determine that it can perform C2 communication over the PC5 interface if the information (d) is configured.

Instead of using information (b), (c), or (d) above, the UE may perform the determination according to the example above, depending on the UE's implementation.

The UE may receive SM NAS messages (e.g., PDU Session Establishment Accept, PDU Session Establishment Reject, etc.) from the SMF. Based on the received SM NAS message (e.g., PDU Session EstablishmentAccept, PDU Session Establishment Reject, etc.) and/or information (e.g., 5GSM cause value, information contained in the Service-level-AA container, etc.) included in the message. The specific description of the 5GSM cause value, Service-level-AA container information can be found in TS 24.501 V17.8.0. For example, if C2 authorization fails, the 5GSM cause value included in the SM NAS message may contain or be set to #29 "user authentication or authorization failed". For example, when C2 authorization fails, the Service-level-AA response information contained in the Service-level-AA container may contain or be set to "C2 authorization was not successful or C2 authorization is revoked."

**[Table 3]**

| Service-level-AA result field (SLAR) (octet 3, bits 1 and 2) | | |
|---|---|---|
| Bits | | |
| 1 | 2 | |
| 0 | 0 | No information |
| 0 | 1 | Service level authentication and authorization was successful. |
| 1 | 0 | Service level authentication and authorization was not successful, or service level authorization was revoked. |
| 1 | 1 | Reserved |
| | | |
| C2 authorization result field (C2AR) (octet 3, bits 3 and 4) | | |

| Bits | | |
|---|---|---|
| 3 | 4 | |
| 0 | 0 | No information |
| 0 | 1 | C2 authorization was successful. |
| 1 | 0 | C2 authorization was not successful, or C2 authorization was revoked. |
| 1 | 1 | Reserved |
| | | |
| Bits 5 to 8 of octet 3 are spare and shall be coded as zero. | | |

Table 3 is an example of a Service-level-AA response information element as defined in Table 9.11.2.14.1 of 3GPP TS 24.501 V17.8.0.

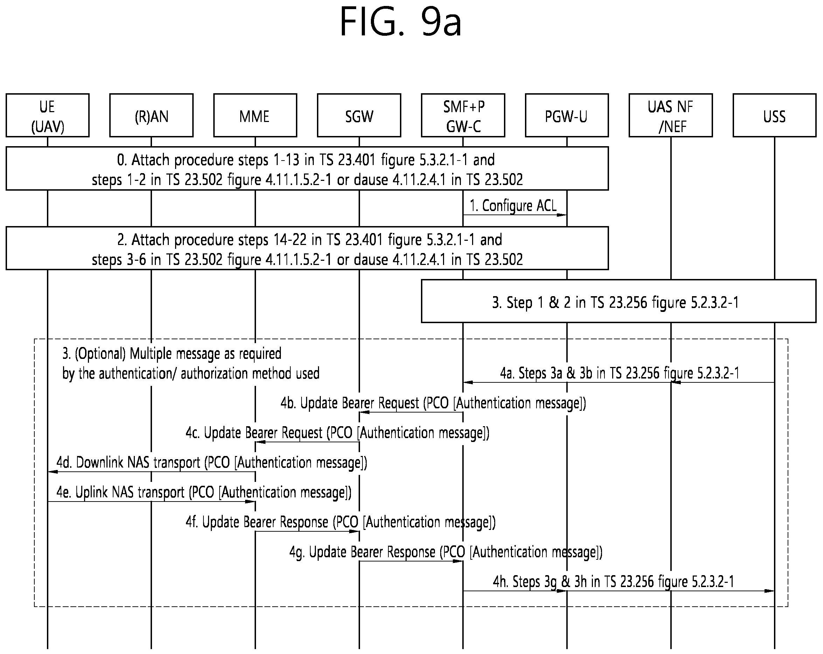

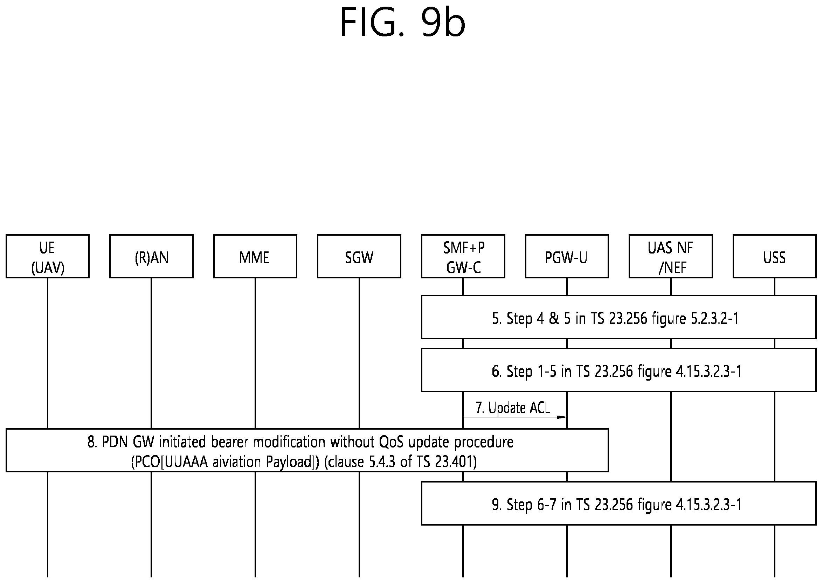

Hereinafter, with reference to the examples of FIGS. 9a and 9b, a second example of the first example of the present disclosure will be described.

The following examples are based on the content of clause 5.2.5.3.0 (C2 Authorization request during UUAA-SM procedure in EPS) of TS 23.256 V17.4.0, and the following discussion focuses on what is proposed in the present disclosure. Note that clause 5.2.5.3.0 of TS 23.256 V17.4.0 above describes additions to clause 5.2.3.3 of TS 23.256 V17.4.0.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 9a** **and** **9b** **illustrate a procedure according to the second example in the first example of the present disclosure.**

The examples in Figure 9a and Figure 9b show an example of UUAA being performed while the PDN connection establishment procedure in the EPS is performed.

The description of the behaviour described in clause 5.2.5.3.0 of TS 23.256 V17.4.0 is omitted.

Step 0. If the information (a) is set in the UE, the UE may determine to perform the C2 communication authorization via Uu.

Step 8 (or after step 5). Based on one or more of the information (b), (c), and/or (d) above and the outcome of the C2 authorization (success or failure), the UE may decide whether to perform C2 communication over the PC5 interface. For example, the following example behaviour may be performed:
- If the C2 authorization is successful, the UE can determine that it can perform C2 communication over the PC5 interface. This determination may be made even if the information (c) is configured or not configured.
- In case of C2 authorization failure, if information (b) above is set, the UE may determine that C2 communication cannot be performed over the PC5 interface. Even if information (b) is not configured, if information (a) is configured, the UE may determine that C2 authorization has failed and the UE is not allowed to perform C2 communication over the PC5 interface.
- If the C2 authorization fails, the UE may determine that it can perform C2 communication over the PC5 interface if the information in (d) above is set.

Instead of using the information in (b), (c) and (d) above, the UE may, depending on the UE's implementation, perform the decision according to the above examples.

The UE may receive SM related NAS messages (e.g., MODIFY EPS BEARER CONTENT REQUEST, DEACTIVATE EPS BEARER CONTENT REQUEST, BEARER MODIFY REQUEST, etc.) from the network (MME/SMF+PGW-C). Based on the received SM-related NAS message (e.g., MODIFY EPS BEARER CONTEXT REQUEST, DEACTIVATE EPS BEARER CONTEXT REQUEST, BEARER MODIFY REQUEST, etc.) and/or the information contained in the NAS message (e.g., ESM cause value, information contained in the Service-level-AA container, etc. The specific description of ESM cause value, Service-level-AA container information can be found in TS 24.301 V17.8.0. For example, if C2 authorization fails, the ESM cause value may contain or be set to #29 "user authentication or authorization failed". For example, when C2 authorization fails, the Service-level-AA response information contained in the Service-level-AA container might include/set "C2 authorization was not successful or C2 authorization is revoked."

In the example referring to FIGS. 8a and 8b and the example referring to FIGS. 9a and 9b, if the UE determines to perform the C2 communication via the PC5 interface, the UE may perform the operation of establishing the C2 connection using the PC5 interface. Furthermore, if the UE decides not to perform C2 communication over the PC5 interface, the UE may reject a request from the other UE (i.e. UAV-C for UAV and UAV-C for UAV) to establish a C2 connection using the PC5 interface. If the UE declines, the UE may send a rejection message to the other UE. The rejection message may include the reason for the rejection (e.g., Uu-based C2 communication authorization failure, Uu-based C2 communication not-authorized, PC5-based C2 communication not-authorized, etc.

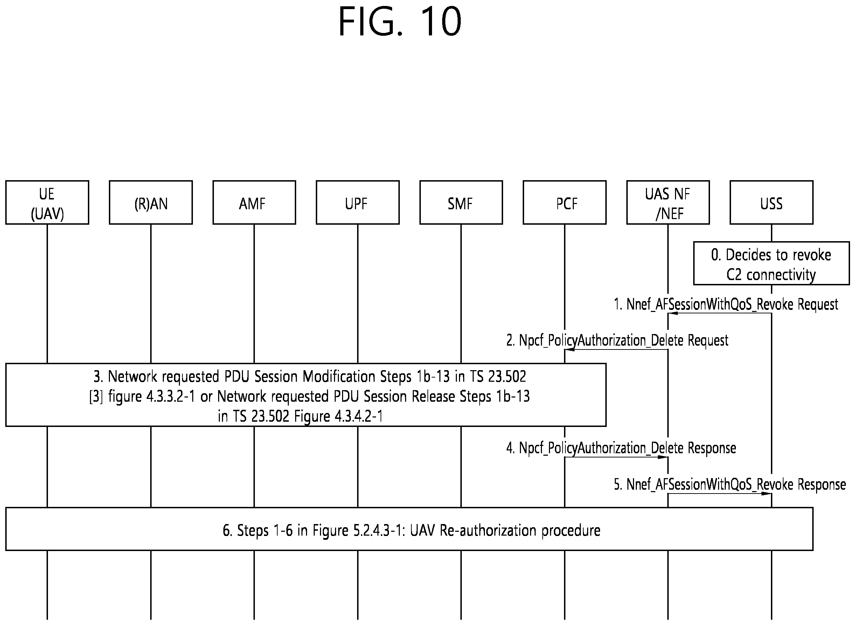

Hereinafter, a third example in the first example of the present disclosure will be described, with reference to the example of FIG. 10.

The following examples are based on the content of clause 5.2.9.1 (Revocation of C2 connectivity in 5GS) of TS 23.256 V17.4.0, and the following discussion focuses on what is proposed in the present disclosure.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 10** **illustrates a procedure according to the third example in the first example of the present disclosure.**

The example in Figure 10 shows an example of revoking a C2 connection on 5GS.

Step 3 or Step 6. Based on one or more of the information (e), (f), (g), and/or (h) above and the C2 connection revocation (or the termination of the PDU Session used for the C2 connection or the termination of the QoS Flow used for the C2 connection), the UE may decide whether to perform C2 communication over the PC5 interface. For example, the following example behaviour may be performed:
- In case of C2 connection revocation (or release of PDU Session/QoS Flow used for C2 connection), the UE may determine that C2 communication over PC5 interface cannot be performed if one or more of the information (e), (g) is configured. Even if information (e) and (g) above is not configured, if information (a) above is configured, the UE may determine that it cannot perform C2 communication over the PC5 interface if the C2 connection revocation (or the release of the PDU Session/QoS Flow used for the C2 connection) has occurred.
- In case of C2 connection revocation (or release of PDU Session/QoS Flow used for C2 connection), the UE may decide that it can perform C2 communication over PC5 interface. The UE may make this decision even if one or more of the information (f), or (h) is configured or not configured.

The UE may receive SM NAS messages from the SMF. Based on the received SM NAS message (e.g., PDU Session Release Command, PDU Session Modification Command, etc.) and/or the information contained therein (e.g., 5GSM cause value, information contained in the Service-level-AA container, etc.), the UE may be aware of the revocation of the C2 connection (or the release of the PDU Session/QoS Flow used for the C2 connection). A detailed description of the 5GSM cause value, Service-level-AA container information can be found in TS 24.501 V17.8.0.

For example, on C2 connection revocation, the 5GSM cause value may include or be set to #29 "user authentication or authorization failed". For example, when a C2 connection is revoked, the Service-level-AA response information included in the Service-level-AA container might include or set "C2 authorization was not successful or C2 authorization is revoked."

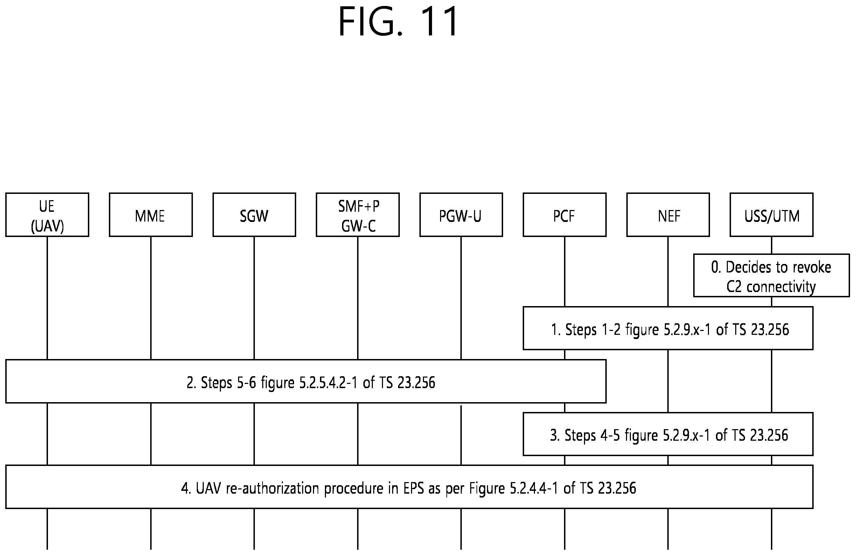

Hereinafter, a fourth example of the first example of the present disclosure is described, with reference to the example of FIG. 11.

The following example is based on the content of clause 5.2.9.2 (Revocation of C2 connectivity in EPS) of TS 23.256 V17.4.0, and is described below in the context of what is proposed in the introduction to this specification.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 11** **illustrates a procedure according to the fourth example in the first example of the present disclosure.**

The example in Figure 11 shows an example of revoking the C2 connection from the EPS.

Step 2 or Step 4. Based on one or more of the information (e), (f), (g), and/or (h) and the C2 connection revocation (or the termination of the PDN connection used for the C2 connection or the termination of the bearer used for the C2 connection), the UE may decide whether to perform C2 communication over the PC5 interface.
- In case of C2 connection revocation (or termination of PDN connection/bearer used for C2 connection), if at least one of the above information (e), or (g) is configured, the UE may determine that C2 communication cannot be performed over the PC5 interface. Even if information (e) and (g) is not configured, if information (a) above is configured, the UE may determine that it cannot perform C2 communication over the PC5 interface if C2 connection revocation (or termination of the PDN connection/bearer used for the C2 connection) has occurred.
- In case of C2 connection revocation (or termination of the PDN connection/bearer used for the C2 connection), the UE may decide that it can perform C2 communication over the PC5 interface. The UE may make this decision even if one or more of the information in (f), (h) above is configured or is not configured.

The UE may receive SM related NAS messages from the network (MNM/SMF+PGW-C). Based on the received SM related NAS message (e.g., MODIFY EPS BEARER CONTENT REQUEST, DEACTIVATE EPS BEARER CONTENT REQUEST, BEARER MODIFY REQUEST, etc.) and/or the information contained in the NAS message (e.g., ESM cause value, information contained in the Service-level-AA container, etc.), the UE may be informed of the C2 connection revocation (or the termination of the PDN connection/bearer used for the C2 connection). For a specific description of the ESM cause value, Service-level-AA container information, see TS 24.301 V17.8.0. For example, for C2 connection revocation, the ESM cause value may contain or be set to #29 "user authentication or authorization failed". For example, for C2 connection revocation, the Service-level-AA response information included in the Service-level-AA container may include or be configured to "C2 authorization was not successful or C2 authorization is revoked."

In the example according to FIG. 10 and the example according to FIG. 11, a UE that was performing C2 communication over the PC5 interface may decide not to perform C2 communication over the PC5 interface. When the UE makes such a decision, the UE may perform an operation to disconnect the C2 connection over the PC5 interface. The PC5 message used for the disconnection operation may include the reason for disconnection (e.g., Uu-based C2 communication revoked, Uu-based C2 communication not-authorized, PC5-based C2 communication not-authorized, etc. For a detailed description of the behaviour of releasing a C2 connection over a PC5 interface, refer to the L2 link release procedure defined in TS 23.287 V17.4.0, TS 23.304 V17.4.0.

### 2. The second example in of the present disclosure

How to inform the UE during the C2 communication authorization procedure via Uu or using Uu connection is described.

For example, during the C2 communication authorization procedure over Uu or using a Uu connection, the network informs the UE whether it is allowed to perform C2 communication over PC5.

If C2 communication authorization via Uu fails (i.e., does not succeed), or if the Uu-based C2 connection is revoked, or if the PDU Session/QoS Flow used for Uu-based C2 communication is released, or if the PDN connection/bearer used for Uu-based C2 communication is released, or if C2 communication authorization via PC5 fails (i.e., does not succeed), or if the PC5-based C2 connection is revoked, the following actions may be performed. For example, the network may provide information to the UE indicating that C2 communication over PC5 is not to be performed (or C2 communication over PC5 is not allowed or C2 communication over PC5 is not authorized).

In the opposite case to the above example, for example, if C2 communication authorization through Uu is successful or C2 communication authorization through PC5 is successful, the following example behaviour may be performed. The network may provide information to the UE indicating that the C2 communication over PC5 is to be performed (or that the C2 communication over PC5 is allowed or that the C2 communication over PC5 is authorized).

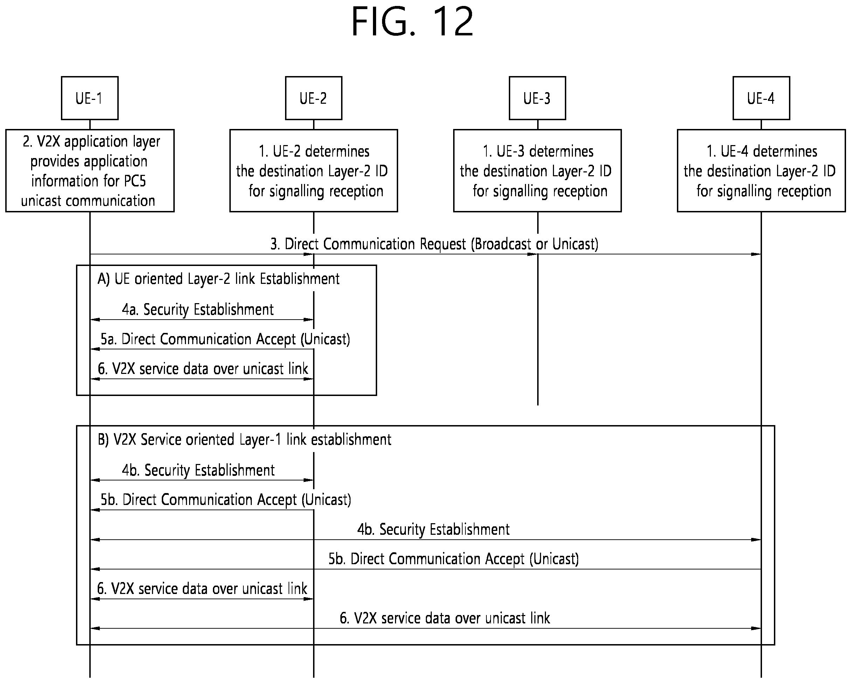

Refer to Figure 12, which illustrates an example of establishing a PC5 unicast link. For a description of establishing or forming a PC5 unicast link in the second example of the present disclosure, reference may be made to the example of FIG. 12.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 12** **illustrates a procedure for establishing a layer-2 link over a PC5 reference point, according to one embodiment of the present disclosure.**

An example of unicast mode V2X communication over a PC5 reference point is described.

Referring to Figure 12, an example of establishing a Layer-2 link through a PC5 reference point is illustrated.

In order to perform V2X communication in unicast mode via PC5 reference point, the relevant information may be configured in the UE.

Figure 12 shows the Layer 2 link setup procedure for unicast mode of V2X communication over a PC5 reference point.
1.The UE(s) determine the destination Layer-2 ID for signalling reception for PC5 unicast link establishment. The destination Layer-2 ID is configured with the UE(s).

1. The UE(s) determines the destination Layer-2 ID for receiving signalling for PC5 unicast link establishment. The destination Layer-2 ID is configured by the UE(s).
2. The V2X application layer of UE-1 provides application information for PC5 unicast communication. The application information includes the type of V2X service and the application layer ID of the initiating UE. The application layer ID of the target UE may be included in the application information.

The V2X application layer in UE-1 can provide the V2X application requirements for this unicast communication. The UE-1 may determine the PC5 QoS parameters and the PC5 QoS Flow ID (PFI).

If UE-1 decides to reuse the existing PC5 unicast link, the UE can trigger the Layer 2 link modification procedure.

3. UE-1 initiates the unicast Layer 2 link establishment procedure by sending a direct communication request message. The direct communication request message may include the following information
- Source User Info: The application layer ID of the initiating UE (i.e., the application layer ID of UE-1).
- If the V2X application layer provided the application layer ID of the target UE in step 2, it includes the following information:
- Target User Info: The application layer ID of the target UE (i.e., the application layer ID of UE-2).
- V2X Service Info: Information about the type of V2X service requesting the Layer 2 link establishment.
- Security Information: Information for establishing security.

The source Layer-2 ID and destination Layer-2 ID used to send the direct communication request message are determined. The destination Layer-2 ID can be a broadcast or unicast Layer-2 ID. If a unicast Layer-2 ID is used, the direct communication request message must include Target User Info.

UE-1 sends a communication request message directly via PC5 broadcast or unicast using the source Layer-2 ID and destination Layer-2 ID.

If PC5 DRX behaviour is required for the transmission and reception of direct communication request messages, e.g., based on NR Tx profiles, the default PC5 DRX settings are used.

4. the security of UE-1 is established as follows:
4a. if the charge user information is included in the direct communication request message, the target UE, i.e., UE-2, may respond by establishing security with UE-1.
4b. Target User info may not be included in the direct communication request message. In this case, the UE that wishes to use the announced V2X service type over the PC5 unicast link with UE-1 shall respond by establishing security with UE-1.

When security protection is enabled(or activated), the UE-1 transmits the following information to the target UE:
- When IP communication is used, the following information may be transmitted:
   - IP Address Configuration: For IP communication, an IP address configuration is required for this link. indicating one of the following values:
      - "IPv6 Router". If the IPv6 address allocation mechanism is supported by the initiating UE (i.e., it is acting as an IPv6 router) ; or
      - "IPv6 address allocation not supported". If the IPv6 address allocation mechanism is not supported by the initiating UE.
      - Link Local IPv6 Address: The locally formed link-local IPv6 address when the UE-1 does not support the IPv6 IP address allocation mechanism, i.e. when "IPv6 address allocation not supported" is indicated in the IP address settings.
      - QoS Info: Information about the PC5 QoS flows to be added. For each PC5 QoS flow, the PFI, the corresponding PC5 QoS parameters (i.e. PQI and conditional other parameters (e.g., MFBR/GFBR, etc.)) and the associated V2X service type.

The source Layer 2 identity used in the security establishment process is determined. The Destination Layer 2 ID is set to the Source Layer 2 ID of the received Direct Communication Request message.

Upon receiving a message related to the security establishment procedure, UE-1 obtains the Layer 2 identity of the peer UE for future communication for signalling and data traffic on this unicast link.

5. Direct communication accept message is sent to UE-1 by the target UE that has successfully established security with UE-1:
5a. (UE oriented layer-2 link establishment) If the target user information is included in the direct communication request message, UE-2 shall respond with a direct communication acceptance message if the application layer ID of the target UE, i.e. UE-2, matches.
5b. (V2X service-oriented Layer 2 link establishment) If the target user information is not included in the direct communication request message, the UE wishing to use the announced V2X service shall respond to the request by sending a direct communication acceptance message (UE-2 and UE-4 in Figure 12).

The direct communication acceptance message includes the following:
- Source User Info: Application layer ID of the UE transmitting the direct communication accept message.
- QoS Info: Information about the PC5 QoS Flow requested by UE-1. For each PC5 QoS Flow, it includes PFI, corresponding PC5 QoS parameters (i.e. PQI and conditional other parameters (e.g., MFBR/GFBR, etc.)) and related V2X service type information.
- If IP communication is used, it includes the following information:
   - IP Address Configuration: For IP communication, an IP address configuration is required for this link. Indicates one of the following values:
      - "IPv6 Router". If the IPv6 address allocation mechanism is supported by the initiating UE (i.e., it is acting as an IPv6 router) ; or
      - "IPv6 address allocation not supported" if the IPv6 address allocation mechanism is not supported by the target UE.
      - Link Local IPv6 Address: A locally formed link-local IPv6 address when the target UE does not support the IPv6 IP address allocation mechanism, i.e. "IPv6 address allocation not supported" is indicated in the IP address settings and UE-1 includes the link-local IPv6 address in the direct communication request message. The target UE shall include a non-conflicting link-local IPv6 address.

If both UEs (i.e., initiating UE and target UE) choose to use link-local IPv6 addresses, duplicate address detection must be disabled.

If the initiating UE or target UE indicates that it supports IPv6 routers, the addressing procedure is performed after Layer 2 link establishment and the link-local IPv6 address may be ignored.

The V2X layer of the UE that establishes the PC5 unicast link forwards the PC5 link identifier assigned to the unicast link and the PC5 unicast link related information to the AS layer. The PC5 unicast link related information includes Layer-2 identity information (e.g., source Layer-2 identity and destination Layer-2 identity) and corresponding PC5 QoS parameters. This allows the AS layer to maintain the PC5 link identifier along with the PC5 unicast link-related information.

6. V2X service data is transmitted via a unicast link established as follows:
The PC5 link identifier and PFI are provided to the AS layer along with the V2X service data.

Optionally, additional Layer 2 identity information (e.g., source Layer 2 ID and destination Layer 2 ID) is provided to the AS layer.

Depending on the UE implementation, Layer 2 identity information may also be provided to the AS layer.

UE-1 uses the source Layer-2 ID (i.e., UE-1's Layer-2 ID for this unicast link) and the destination Layer-2 ID (i.e., the peer UE's Layer-2 ID for this unicast link) to transmit V2X service data.

Since the PC5 unicast link is bidirectional, a peer UE of UE-1 can send V2X service data to UE-1 over the unicast link with UE-1.

Hereinafter, with reference to FIGS. 8a and 8b, a first example of the second example of the present disclosure is described. Of note, while FIGS. 8a and 8b were previously referenced to illustrate the first example of the first embodiment of the present disclosure, the following will describe what is proposed in the first example of the second embodiment of the present disclosure based on FIGS. 8a and 8b.

USS UAV Authorization/Authentication (UUAA) can be triggered by SMF during PDU session establishment. UUAA may also be triggered based on SM subscription data obtained from the UDM and the service level device ID provided by the UE in the PDU session establishment request or PDN connection establishment request.

Step 0. Steps 1 to 5 of the example of FIG. 5 may be performed.

The UAV may include the following information in the PDU session establishment request message, as shown in the following examples For example, the UAV may include a service-level device identifier (e.g., UVA's CAA-level UAV ID), an Authentication Server Address (e.g., USS address), and optionally authorization data (e.g., UUAA airborne payload) in the PDU Session Establishment Request message.

Step 1. The SMF may send authorization-related messages to the UAS NF/NEF. For example, the SMF may send authorization -related messages to the USS through the UAS NF/NEF. For example, the SMF may invoke the Nnef_Authentication_AuthenticateAuthorize service operation. This service operation may include the service level device ID (including the CAA level UAV ID of the UAV), DNN, S-NSSAI, and may include the authorization server address (i.e., USS address) and UUAA aviation payload (if provided by the UE), GPSI, optionally the UAV location, PEI if available, and UE IP address if available. The UAV location is the user location information (e.g., cell ID) provided by the AMF. The UAS NF/NEF selects the USS based on the service level device ID (e.g., CAA-level UAV ID of the UAV) or the authorization server address (e.g., USS address).

Step 2. The UAS NF/NEF may transmit authorization-related messages to the USS. For example, the UAS NF/NEF may invoke the Naf_Authentication_AuthenticateAuthorize service operation to forward the authorization request information received from the SMF to the USS. For example, the UAS NF may translate the Cell ID received as part of the UAV location in the Nnef_Authentication_AuthenticateAuthorize request in step 1 to the corresponding geographical area. and/or the UAS NF may use location service procedures to further obtain UE location information and include it in the Naf_Ahentication_AuthenticateAuthorize message to the USS to support geo-caging functionality.

Step 3. [Conditional operation] Depending on the authorization method used by the USS, several necessary round-trip messages may be sent or received. The response message of the USS (e.g., Naf_Authentication_AuthenticateAuthorize response message) includes the GPSI, and the authorization message according to the authorization method used is transparently communicated to the UE via the NAS SM transport message. The authorization message in step 3 may include the UUAA aviation payload required by the USS if not previously provided by the UE.

Step 4. The USS may send an authorization response message (e.g., Naf_Authentication_AuthenticateAuthorize response) to the UAS NF/NEF. The authorization response message may include the result of the Authentication/authorization. The Authentication/Authorization result may include the UUAA result for the UAS NF and information related to whether the UAS service associated with the network resource may be released for re-authentication or re-authorization in the event of a UUAA failure. Optionally, the authorization/authentication result may include an authenticated CAA-level UAV ID, requested policy information, and a service-level device ID that includes the UUAA authorization payload. The policy information requested by the USS may include a DN authentication profile index and/or a DN authentication session AMBR. The USS may include the new CAA-level UAV ID as the authorization CAA-level UAV ID.

Step 5. The SMF may receive an authorization response message from the UAS NF/NEF. For example, the SMF may receive a response message from the UAS NF/NEF including information/results that the C2 authorization failed or succeeded. In this embodiment, the C2 authorization may be an authorization for C2 communication via Uu and/or an authorization for C2 communication via PC5. The authorization response message may be a message sent by the USS to the SMF via the UAS NF/NEF.

Step 6. Upon successful authentication/authorization, the USS subscribes to PDU session status events. For example, the behaviour according to Steps 1 to 5 of Figure 4.15.3.2.3-1 of TS 23.502 V17.6.0 may be performed. Step 6 may be performed in parallel with step 4. The UAS NF/NEF shall determine which DNN, S-NSSAI, shall subscribe to the PDU session status event notification.

Step 7. The SMF can send the SM NAS message to the UE. For example, when the SMF transmits an SM NAS message (e.g., PDU Session Establishment Accept, PDU Session Establishment Reject, PDU Session Modification Command, etc.) to the UE, the SMF may include the following information in the SM NAS message:
i) In case of C2 authorization failure (i.e., the SMF receives a response message from the UAS NF/NEF including information/result that C2 authorization has failed), the SMF may include information indicating/instructing not to perform C2 communication over the PC5 interface in the SM NAS message. This may be interpreted as C2 communication over the PC5 interface is not allowed/authorized.
ii) Upon successful C2 authorization (i.e. when the SMF receives a response message from the UAS NF/NEF including information/result that the C2 authorization was successful), the SMF may include information that is the opposite of the case i) (e.g., information indicating that C2 communication can be performed via the PC5 interface. This information may be interpreted as allowing/authorizing C2 communication over the PC5 interface) in the SM NAS message. The SMF may also provide UAV-C specific information (e.g., Application Layer ID of the UAV-C (which may be interpreted as User Info or Pilot Info), Layer-2 ID, etc.) to the UE. For example, the SMF may send an SM NAS message including UAV-C related information (e.g., Application Layer ID of the UAV-C (which may be interpreted as User Info or Pilot Info), Layer-2 ID, etc.) to the UE via the AMF. The SMF may provide or obtain information related to the UAV-C from one or more of the following entities: USS, UAS NF/NEF, UDM, UDR, PCF, UAV-C, Application Server/Function. Alternatively, information related to the UAV-C may be configured in the SMF. All of the information related to the UAV-C may be provided or obtained from a single entity, or from multiple entities. For example, the SMF may receive information related to the UAV-C (e.g., the Application Layer ID of the UAV-C) from the USS, and the SMF may transmit the information related to the UAV-C (e.g., the Application Layer ID of the UAV-C) to the UE (e.g., the UAV). The UAV may use the information related to the UAV-C provided above to establish a PC5 unicast link for C2 communication with the UAV-C (or, alternatively, the UAV may use the information related to the UAV-C provided above to form a PC5 unicast link for C2 communication with the UAV-C). For example, based on the example of FIG. 12, the UE (e.g., UAV) may perform a procedure for establishing a PC5 unicast link for C2 communication with the UAV-C. For example, in Step 3 of FIG. 12, the UE (e.g., UAV) may set the Target User Info to the Application Layer ID of the UAV-C. The reason why the SMF includes the information related to the UAV-C may be because the UE has requested such information (in step 1). The information related to the UAV-C may also be information related to the Third Party Authorized Entity (TPAE). In this case, the TPAE may be considered to be a PC5 capable UE or a V2X capable UE or a ProSe enabled UE.

The UAV may establish a PC5 unicast link for C2 communication with the UAV-C or a Third Party Authorized Entity (TPAE). In this case, the UAV may set the Application Layer ID to Target User Info if it has an Application Layer ID provided by the network. In addition, if the UAV has a Layer-2 ID provided by the network, the UAV may set the Layer-2 ID to the Destination Layer-2 ID and the UAV may use the Layer-2 ID to the Destination Layer-2 ID to establish a PC5 unicast link (e.g., the UAV uses the Destination Layer-2 ID to send Direct Communication Request messages). If the network has also provided the UAV's Layer-2 ID, the UAV may set the UAV's Layer-2 ID as the Source Layer-2 ID and use the Source Layer-2 ID to establish a PC5 unicast link (e.g., the UAV uses the Source Layer-2 ID to send Direct Communication Request messages). The operation of the UAV obtaining the UAV's Layer-2 ID from the network may be performed in a similar manner to the operation of the UAV obtaining the UAV-C related information above from the network. This description of PC5 unicast link formation may be applied throughout the present disclosure.

UAV-C related information or TPAE related information may also be inferred/determined based on identification information of the UAV (e.g., identification information of one or more of CAA-Level UAV ID (or Service Level Device Identity of the UAV), GPSI, PEI, IP address information). This may be applied throughout this specification.

Among UAV-C related information and TPAE related information, application layer related information (e.g., Application Layer ID) may also be considered as direct C2 pairing information or C2 pairing information. For example, application layer related information (e.g., Application Layer ID) may be provided to the UE as direct C2 pairing information or C2 pairing information. This may be applied throughout this specification.

For example, in step 0 of the example of FIGS. 8a and 8b, the following example description may apply. It may be necessary for the UAV to establish a direct PC5 link to connect to the UAV-C (i.e., direct C2 communication). In this case, the C2 Aviation payload transmitted by the UAV may include an indication that it is also an authorization for direct C2 communication. The UAV may also include direct C2 pairing information (if available) in the C2 Aviation payload.

For example, in step 4 of the example of FIGS. 8a and 8b, the following illustrative description may apply. If an authorization request for direct C2 communication was included in step 0 and the C2 authorization was successful, the USS may include direct C2 pairing information in the C2 authorization payload that includes the application layer ID of the UAV-C. The C2 authorization payload including the application layer ID of the UAV-C may be included in the Naf_Ahentication_AuthenticateAuthorize response, which may be further forwarded to the UE.

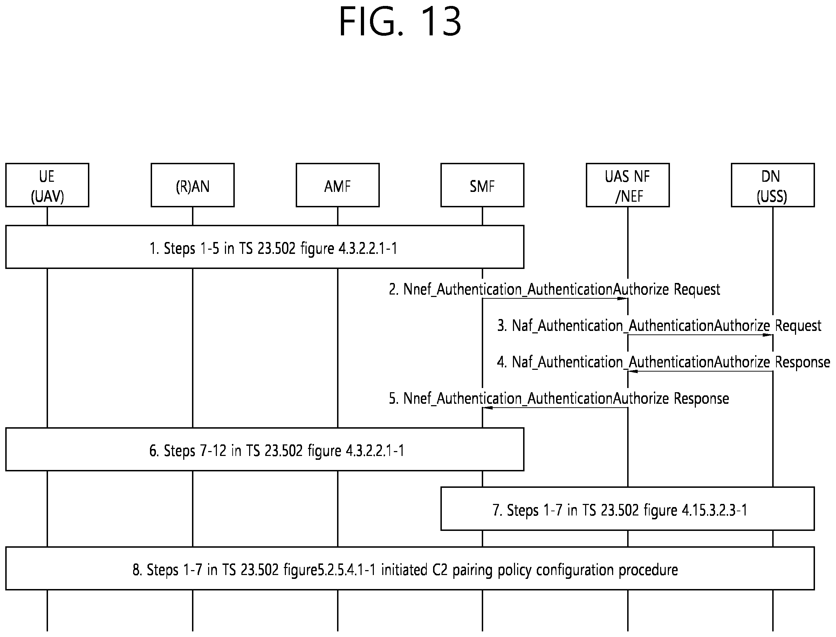

For example, in step 1 of the example of FIG. 13 below, the following description may apply. It may be necessary for the UAV to establish a direct PC5 link to connect to the UAV-C (i.e., direct C2 communication). In this case, the C2 Aviation payload transmitted by the UAV may include an indication that it is also an authorization for direct C2 communication. The UAV may also include direct C2 pairing information (if available) in the C2 Aviation payload.

For example, in step 4 of the example of FIG. 13 below, the following illustrative description may apply. If an authorization request for direct C2 communication was included in step 0, and the C2 authorization was successful, the USS may include direct C2 pairing information in the C2 authorization payload that includes the application layer ID of the UAV-C. The C2 authorization payload including the application layer ID of the UAV-C shall be included in the Naf_Ahentication_AuthenticateAuthorize response, which may be further forwarded to the UE.

The above information related to UAV-C or information relate to TPAE may be provided. In this case, such information may be interpreted as in the following examples. For example, such information may be interpreted as the following: the UAV-C or TPAE is authorized to control the UAV, or the UAV-C or TPAE is authorized to conduct C2 communication with the UAV, or the UAV-C or TPAE is authorized to conduct C2 communication with the UAV via the PC5, or the UAV-C or TPAE is authorized to be paired with the UAV, is authorized to be paired with the UAV, etc. This may be applied throughout the present dislcosure.

The UAV may establish a C2 connection via PC5 with the most recently established or network-provided C2 connection opponent (e.g., UAV-C or TPAE). This may be applicable throughout this specification.

The SMF may include information related to i) or ii) above in the SM NAS message for the reasons described in the examples below. For example, in step 0, because the UE has requested authorization information for PC5 based C2 communication, the SMF may include the information in the SM NAS message. For example, because the AMF has requested the UE to provide authorization information for PC5 based C2 communication (in step 1), the SMF may include the information in the SM NAS message, based on the subscriber information (e.g., that authorization information for PC5 based C2 communication need to be provided to the UE when performing Uu based C2 communication authorization, that the UE is capable of performing PC5 based C2 communication, etc.). If the USS has requested the UE to provide authorization information for PC5 based C2 communication (in step 4), the SMF may include the above information in the SM NAS message. The UAS NF/NEF has requested the UE to provide authorization information for PC5-based C2 communication (in step 5), and the SMF may include this information in the SM NAS message. Based on the local policy/operator policy/local configuration of the SMF, the SMF may include the above information in the SM NAS message. Based on one or more of the various pieces of information in these examples, the SMF may include the information in the SM NAS message.

The UE may receive SMF NAS messages from the SMF. The SM NAS message may include information based on i) or information based on ii). The UE may determine, based on the SM NAS message received from the SMF and/or the information based on i) or ii) above, whether a C2 communication can be performed over the PC5 interface.

Hereinafter, with reference to FIGS. 9a and 9b, a second example of a second aspect of the present disclosure will be described. Of note, while FIGS. 9a and 9b were previously referenced to describe a second example of the first example of the present disclosure, the following will describe what is proposed in the second example of the second example of the present disclosure based on FIGS. 9a and 9b.

Step 5. The SMF+PGW-C receives a response message from the UAS NF/NEF including information/results that the C2 authorization failed or succeeded. In this embodiment, the C2 authorization may be an authorization for C2 communication via Uu and/or an authorization for C2 communication via PC5.

Step 8 (or after step 5). The SMF+PGW-C may send SM related NAS messages to the UE via MME. The SMF+PGW-C may include the following information in the SM related NAS message (e.g., MODIFY EPS BEARER CONTENT REQUEST, DEACTIVATE EPS BEARER CONTENT REQUEST, etc.):
I) In case of C2 authorization failure (i.e., when a response message including information/result that C2 authorization failed is received from the UAS NF/NEF), the SMF+PGW-C may include information in the SM-related NAS message that indicates/instructs not to perform C2 communication over the PC5 interface. This may be interpreted as C2 communication over the PC5 interface is not allowed/authorized.
II) Upon successful C2 authorization (i.e., when the SMF+PGW-C receives a response message from the UAS NF/NEF including information/result that the C2 authorization was successful), the SMF+PGW-C may include information opposite to case I) above (e.g., information indicating that C2 communication can be performed via the PC5 interface. This information may be interpreted as allowing/authorizing C2 communication over the PC5 interface) in the SM-related NAS message. In this case, the SMF+PGW-C may also provide UAV-C related information (e.g., the Application Layer ID of the UAV-C (which may be interpreted as User Info or Pilot Info), Layer-2 ID, etc.) to the UE. For example, the SMF+PGW-C may provide the UE with an SM NAS message including UAV-C related information (e.g., Application Layer ID of the UAV-C (which may be interpreted as User Info or Pilot Info), Layer-2 ID, etc.). The SMF+PGW-C may provide or obtain the UAV-C related information from one or more of the following entities: USS, UAS NF/NEF, UDM/HSS, UDR, PCF, UAV-C, Application Server/Function. Alternatively, the above UAV-C related information may be configured in the SMF+PGW-C. All of the UAV-C related information may be provided or acquired from one entity, or may be provided or acquired from multiple entities. The UAV may use the UAV-C related information provided above to form a PC5 unicast link for UAV-C and C2 communication (or the UAV may use the UAV-C related information provided above to form a PC5 unicast link for UAV-C and C2 communication). The reason why the SMF+PGW-C includes the above UAV-C related information may be because the UE has requested such information (e.g., it may be requested by the UE in step 0). The above UAV-C related information may also be Third Party Authorized Entity (TPAE) related information. In this case, the TPAE may be considered to be a PC5 capable UE or a V2X capable UE or a ProSe enabled UE.

The SMF+PGW-C may include information related to I) or II) described above in the SM NAS message for the reasons given in the examples below. For example, if the UE has requested authorization information for PC5 based C2 communication (in step 0), the SMF+PGW-C may include the information in the SM NAS message. For example, the MME has requested the UE to provide authorization information for PC5 based C2 communication (in step 1), the SMF+PGW-C may include the the information in the SM NAS message. For example, based on subscriber information (e.g., information that the UE shall provide authorization information for PC5-based C2 communication when performing Uu-based C2 communication authorization, that the UE is capable of performing PC5-based C2 communication, etc.), the SMF+PGW-C may include the above information in the SM NAS message. For example, if the USS has requested the UE to provide authorization information for PC5-based C2 communication (in step 5), the SMF+PGW-C may include the above information in the SM NAS message. For example, if the UAS NF/NEF has requested the UE to provide authorization information for PC5-based C2 communication (in step 5), the SMF+PGW-C may include the above information in the SM NAS message. Based on the local policy/operator policy/local configuration of the SMF+PGW-C, the SMF+PGW-C may include the above information in the SM NAS message. Based on one or more of the various information such as these examples, the SMF+PGW-C may include the above information in the SM NAS message.

Based on the SM related NAS message to the UE received from the network and/or the information in I) or II) above, the UE may determine whether it can perform C2 communication over the PC5 interface.

Hereinafter, a third example in the second example of the opening of the present disclosure is described.

For reference, the third example in the second example of the present disclosure is an embodiment based on the first and/or second example in the second example of the present disclosure described above. For example, the third example in the second example of the opening of the present disclosure is an example to which the description of the second example of the opening of the present disclosure applies.

C2 communication and direct C2 communication can be defined as follows.

Command and Control (C2) Communication: User plane link for passing messages including command and control information for UAV operation from the UAV controller or UTM to the UAV. Or user plane link for reporting telemetry data from the UAV to the UAV controller or UTM. C2 communications may be established via the Uu reference point or the PC5 reference point.

Direct C2 Communication: To communicate with each other, the UAV controller and UAV can establish a direct C2 link via the PC5 reference point.

C2 Aviation Payload: Includes application layer information transmitted by the UAS to the USS, including UAV pairing information and/or flight authorization information transparent to the 3GPP system.

C2 Authorization Payload: Includes application layer information sent by the USS to the UAV, such as C2 pairing information and/or C2 security information transparent to the 3GPP system.

C2 Pairing Information: Includes the UAV-C addressing information (e.g., UAV-C IP address).

Authorization for C2 over Uu is described.

When the UAV establishes a user plane connection for C2 operations (i.e., to pass messages including command and control information about UAV operations from the UAV-C or USS to the UAV, or to report telemetry data from the UAV to the UAV-C), authorization to C2 is required. Both sides of a C2 communication, the UAV and the UAV-C, may belong to the same UAS.

The UAV can be authorized by the USS to use a PDU session or PDN connection for C2. Authorization for C2 includes the following:
- UAV to UAV-C pairing authorization: This can be for pairing with a networked UAV-C or a UAV-C that connects to the UAV via an internet connection, before the UAV and UAV-C exchange C2 communications. A UAV may only be paired with one UAV-C at any given time. A UAV-C may be paired with one or more UAVs at the same time.
- Flight Authorization: If the UAV also provides flight certification information, this may be an authorization to fly.

C2 authorization may be performed in the following examples:
- During the UUAA procedure (when UUAA is performed on PDU session/PDN connection establishment): When the UAV requests the establishment of a PDU session/PDN connection for connectivity.
- During PDU session modification procedure or UE requested bearer resource modification procedure: when the UAV needs to use an existing PDU session/PDN connection to exchange C2 communication related messages.
- During the establishment of a new PDU session/PDN connection: when the UAV needs to use a separate PDU session/PDN connection for C2 communication.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 13** **illustrates an example procedure for establishing a PDU session for C2 communication, according to one embodiment of the present disclosure.**

FIG. 13 shows the procedure for establishing a PDU session for UE initiated C2 communication. The example in FIG. 13 is an example of when separate PDU sessions are used for UAS services.

If C2 authorization is requested during the establishment procedure for a PDU session specifically used for C2 communication with UAV-C, the UAV shall request C2 authorization as follows.

0. The UAV has performed a successful UUAA with the USS (UUAA-SM or UUAA-MM), and the USS may subscribe to PDU session status events from the NEF for that GPSI.

1. If the UAV needs to establish C2 communications, the UAV may determine that a new dedicated PDU session or direct PC5 link is required to connect to the UAV-C. The UE may initiate a PDU session establishment procedure for the DNN/S-NSSAI used to connect to the UAV-C. The PDU session establishment request shall include the CAA-Level UAV ID and the C2 Aviation payload to be used for C2 authorization, and the PDU session establishment request shall be forwarded to the SMF. The pairing information includes the CAA-level UAV ID of the requesting UAV, and the identification of the UAV-C to be paired may be included in the C2 Aviation payload. If the authorization request is for direct C2 communication, the C2 aviation payload includes an indication that the authorization is for direct C2 communication. The UAV may also include other information in the Aviation Payload, such as flight certification information. The USS may also use locally configured pairing information to authenticate the UAV - UAV-C pairing, which takes precedence over the pairing information provided by the UAV.

2. based on the fact that the requested DNN/S-NSSAI combination is for aerial services only (aerial services indicator is set) and the request includes the service level device identification (CAA-level UAV ID), the SMF may determine whether authorization is required. The SMF may then send a Nnef_Authentication_AuthenticateAuthorize request message to the UAS NF/NEF, which is used to request authorization to pair the UAV-C with the UAV. This request message includes the GPSI, CAA level UAV ID and C2 Aviation payload, optionally the UAV location (e.g., cell ID) if provided by the AMF, and the DNN and S-NSSAI of the PDU session.

If the requested DNN/S-NSSAI is for aerial services only, but a service-level device ID (CAA-level UAV ID) is not provided with the request, the SMF may reject the PDU session establishment request with the reason that USS authorization is required. For example, the SMF may send a PDU session establishment reject message that includes the reason that USS authorization is required.

The SMF also provides a Notification Endpoint to the UAS NF/NEF. By providing the Notification Endpoint, the SMF may implicitly subscribe to receive notifications about reauthorization, authorization data updates, or revocation of the UAS NF/NEF's C2 connection if the C2 authorization result in step 5 is successful.

3. The UAS NF/NEF checks that a valid UUAA is stored for the GPSI and forwards a Naf_Authentication_AuthenticateAuthorize request message including the received authorization request to the USS. Otherwise, the request is not forwarded to the USS and the PDU session is rejected.

The UAS NF/NEF also provides a notification endpoint to the USS. By providing the notification endpoint, the UAS NF/NEF can implicitly subscribe to receive authorization, authorization data update, or C2 disconnection notifications from the USS if the UUAA result in step 5 is successful.

The USS may trigger UAV re-authentication/re-authorization in response to a query from the UAS NF/NEF.

4. The USS may perform C2 authorization based on the information received and send a Naf_Authentication_AuthenticateAuthorize response message to the UAS NF/NEF. The Naf_Authentication_AuthenticateAuthorize response message may include the service-level device identification (e.g., CAA-level UAV-ID) (potentially new), the C2 authorization result, and the C2 authorization payload (e.g., C2 pairing information and C2 security information, direct C2 pairing information).

In step 1, an authorization request for direct C2 communication was included, and C2 authorization can be successful. In this case, the USS may include the direct C2 pairing information, including the application layer ID of the UAV-C, in the Naf_Ahentication_AuthenticateAuthorize response message.

5. The UAS-NF/NEF may send an Nnef_Authentication_AuthenticateAuthorize response message including the information received from the USS, to the SMF.

6. The SMF may send a PDU session establishment acceptance message to the UE. To inform the UE of the C2 authorization result, the SMF may include in the PDU session establishment accept message the authorization result, optionally the authorization payload (e.g., C2 pairing information and C2 security information, direct C2 pairing information) and, if received from the USS, the new CAA-level UAV ID. The SMF may then proceed until the PDU session establishment procedure is complete.

If a failed C2 authorization result is received from the USS, the SMF may reject the PDU establishment and send a PDU session establishment reject message including a reason code indicating that the PDU was not authenticated.

7. [conditional] If the C2 authorization is successful, the USS subscribes to PDU session status events for the PDU session used for C2 by sending a request message including the GPSI of the UAV through the UAS-NF. The UAS NF determines the DNN, S-NSSAI corresponding to the PDU session used for C2 communication and subscribes to PDU session status events to the SMF using this DNN, S-NSSAI. The SMF may detect that a PDU session has been established, as described in steps 6-7 of fig. 4.15.3.2.3-1 of TS 23.502 V17.6.0, and send a PDU session status event report to the UAS NF/NEF via an Nsmf_EventExposure_Notify message including the GPSI and UE IP Address. The UAS NF/NEF shall then forward the event message to the USS.

8. [conditional] The USS stores the received UE IP address, and with the received PDU session IP address and the IP address of the authenticated paired UAV-C as input, the USS can invoke the pairing policy setting procedure. Accordingly, the USS requests the UPF to allow the corresponding traffic in the PDU session.

Unless dedicated QoS is requested for C2 flows, this procedure does not invoke interaction with the UE, AMF or RAN.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

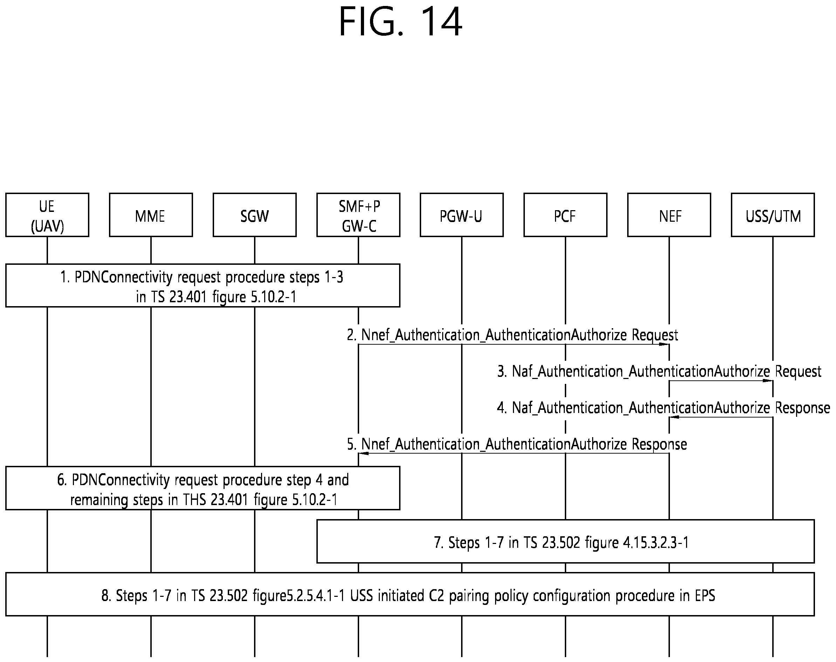

**FIG. 14** **is an example of a PDN connection for C2 authorization, according to one embodiment of the present disclosure.**

FIG. 14 is an example of the procedure for establishing a PDN connection for C2 authorization requested by the UE.

When the UAV requests to establish a connection to an additional PDN via E-UTRAN for C2, the following modifications to the procedure in clause 5.10.2 of TS 23.401 may be applied, as illustrated in the following example
0. The UAV has performed a successful UUAA with the USS (UUAA-SM), and the USS may have subscribed to PDN connection status event reporting from the NEF for that GPSI.
1. steps 1 to 3 described in Figure 5.10.2-1 of TS 23.401 may be performed.

If the UAV needs to establish C2 communication, the UAV may determine that a new PDN connection or a direct PC5 link is required to connect to the UAV-C. The UE shall initiate the PDN connection procedure requested by the UE to connect to the UAV-C. The PCO included in the PDN connection request message inlcudes the service level device identity (e.g., CAA-level UAV ID) and the C2 aeronautical payload to be used for C2 authorization, and the PCO is forwarded to the MME. The pairing information includes the service-level device identifier (e.g., CAA-level UAV ID) of the requesting UAV, and the identification of the UAV-C to be paired may be included in the C2 airborne payload. If the authorization request is an authorization request for direct C2 communication, the C2 airborne payload includes an indication that it is an authorization for direct C2 communication. The UAV may also include other information, such as flight authorization information. In addition, the USS may use locally configured pairing information for UAV - UAV-C pairing authorization, which takes precedence over the pairing information provided by the UAV.

If a service level device ID (CAA-level UAV ID) is provided with the request message, the SMF+PGW-C may retrieve the UE's session management subscription data (if not already available) from the UDM+HSS using the Nudm_SDM_Get service operation.

2. based on the requested APN/DNN is for aerial service only (aerial service indicator is set) and the request message includes a service level device identifier (CAA-level UAV ID), the SMF+PGW-C may determine that authorization is required. The SMF+PGW-C then sends an Nnef_Authentication_AuthenticateAuthorize request message to the UAS NF/NEF, which is used to request authorization to pair the UAV-C with the UAV. This request message includes the GPSI, service level device identifier (e.g., CAA-level UAV ID) and C2 Aviation payload, and optionally the UAV location (e.g., cell ID) (if provided by the MME) and the APN/DNN of the PDN connection.

If the SMF+PGW-C determines that an authorization procedure with the USS is required, but the UAV has not provided a service level device ID (e.g., CAA level UAV ID), the SMF+PGW-C shall send a PDN connection request rejection message with the reason that USS authorization is required.

3. the UAS NF/NEF checks if a valid UUAA is stored for the GPSI and forwards the received authorization request to the USS as a Naf_Authentication_AuthenticateAuthorize request. Otherwise, the request is not forwarded to the USS and the PDN connection is rejected.

4. The USS performs C2 authorization based on the information received and sends a Naf_Authentication_AuthenticateAuthorize response to the UAS NF/NEF including the Service Level Device ID (e.g., CAA-level UAV-ID) (potentially new), the C2 authorization result, and the C2 authorization payload (e.g., C2 pairing information and C2 security information, direct C2 pairing information).

If Step 1 included an authorization request for direct C2 communication and the C2 authorization was successful, the USS may include direct C2 pairing information in the Naf_Ahentication_AuthenticateAuthorize response that includes the application layer ID of the UAV-C.

5.The UAS NF/NEF forwards the information received from the USS to the SMF+PGW C in the Nnef_Authentication_AuthenticateAuthorize response.

6. To inform the UE of the C2 authorization result, the SMF+PGW-C may include the C2 authorization result and optionally the authorization payload (e.g., C2 pairing information and C2 security information, direct C2 pairing information) and the new service level device ID (e.g., CAA level UAV ID) (if received from the USS) in the PCO of the PDN Connectivity Accept to be sent to the UE, and the SMF+PGW-C shall include it and continue until the PDN connection request procedure is completed.

If a failed C2 authorization result is received from the USS, the SMF+PGW-C instead rejects the PDN connection request and sends a rejection message with a cause code indicating that it is not authorized.

7. Upon successful C2 authorization, the USS includes the UAV's GPSI in the request to subscribe to PDN connection status event reporting for the PDN connection used for C2 via the UAS NF/NEF. The UAS NF/NEF determines the APN/DNN and subscribes to PDN connection status events to the SMF+PGW-C using this APN/DNN. The SMF+PGW-C detects when a PDN connection is established, as described in steps 6-7 of figure 4.15.3.2.3-1 of TS 23.502. The SMF+PGW-C shall then send a PDN connection status event report, including GPSI and UE IP Address, to the UAS NF/NEF via Nsmf_EventExposure Notify message. The UAS NF/NEF then forwards the event message to the USS.

8. To request to allow such traffic on the PDN connection by the PGW-U, the USS may store the received UE IP address and invoke the USS initiated C2 pairing policy setting procedure in the EPS procedure (see Figure 5.2.5.4.2-1) with the received PDN connection IP address and the IP address of the authenticated paired UAV-C as input.

Unless dedicated QoS is requested for C2 flows, this procedure does not invoke any interaction with the UE, MME or RAN.

Describe Direct C2 Communication.

UAVs that support direct C2 communication can establish a direct PC5 link with the UAV-C. UAVs using direct C2 communications may or may not be connected to a 3GPP network. The UAV may be authenticated by the USS to establish direct C2 communications with the UAV-C. As illustrated in the example with reference to FIG. 13 and the example with reference to FIG. 14, information relevant to the UAV-C establishing direct C2 communications with the UAV may be preset within the UAV or provided by the network. The UAV may be preset with an Aircraft-to-Everything (A2X) service type for direct C2 communications, direct C2 pairing information (e.g., an application layer ID of the UAV-C), a layer-2 ID of the UAV-C, a default destination layer-2 ID for initial signalling to establish a unicast connection, and an authorization policy for direct C2 communications.

Authorization for Direct C2 Communication is described.

The following authorization policies may be offered to UAVs supporting direct C2 communication:
- When the UAV is "Served by NG-RAN":
- When the UAV is "served by NG-RAN", a PLMN that is authorized to perform direct C2 communications via a PC5 reference point.
- If the UAV is not "Served by NG-RAN":
   - Information indicating whether the UE is authorized to perform C2 communications via the PC5 reference point when "not served by NG-RAN".

If the UAV is able to connect to a 3GPP network, the UAV performs C2 authorization as described earlier for "Authorization for C2 over Uu". If the UAV supports direct C2 communication and there is no authorization policy for direct C2, the UAV may include an indication of direct C2 communication authorization in the authorization request.

Describes the Procedure for Direct C2 Communication establishment.

The unicast mode 5G ProSe direct communication procedure defined in clause 6.4.3.1 of TS 23.304 V17.4.0 shall be used for the establishment of C2 communication over PC5, with the following enhancements The following enhancements may also be applied to the example referenced in FIG. 12.
- In Step 3 of clause 6.4.3.1 of TS 23.304 V17.4.0 (or Figure 12), the following description may apply:
- Prose Service Info may be configured to A2X service type for C2 communication. The A2X service type for C2 communication may be preset on the UAV.
- Source User Info can be configured to the service level device ID (e.g., CAA-Level UAV ID).
- Target User Info may be configured to the application layer ID of the UAV-C. As illustrated in the example of FIG. 13 and the example of FIG. 14, the application layer ID of the UAV-C may be preset on the UAV, or may be provided by the network.
- The destination Layer-2 ID is set to the Layer-2 ID of the UAV-C (if the UAV is preset with the Layer-2 ID of the UAV-C). Otherwise, the destination Layer-2 ID is set to the default destination Layer-2 ID for initial signalling to establish a unicast connection as preset in the UAV.

For direct C2 communication, a unicast mode 5G direct communication procedure may be supported.

### 3. A third example of the present disclosure

An example where the network uses the Uu connection to notify the UE when it wants to change the destination for PC5-based C2 communication with the UAV is described.

For example, the network may use the Uu connection to notify the UE when it wants to change from UAV-C to TPAE or from TPAE to UAV-C, or from UAV-C to TPAE, as long as it has a PC5-based C2 connection with the UAV (i.e., performs C2 communication based on PC5).

When a UAV-C that has a PC5-based C2 connection with a UAV (i.e., performs C2 communication based on PC5) is changed, or when a UAV-C is changed to a TPAE, or when a TPAE is changed to a UAV-C, one or more of the following operations may be performed:
a) The UAV Controller Replacement procedure may be used (see clause 5.2.8 of TS 23.256 V17.4.0). For example, the USS may provide information to the UAS NF/NEF about the change or information indicating that the (re-)authorization is for the change. The UAS NF/NEF may provide the above information to the SMF (for 5GS) or SMF+PGW-C (for EPS). The SMF (in case of 5GS) may include the above information when it transmits the SM NAS message to the UE, or when the SMF+PGW-C (in case of EPS) transmits the SM related NAS message to the UE via the MME.
b) The C2 connectivity revocation procedure may be utilised (see example in Figure 10 and example in Figure 11). For example, the USS may provide the UAS NF/NEF with information about the above changes or information indicating that the revocation is for the above changes. The UAS NF/NEF may provide the information to the SMF (in the case of 5GS) or SMF+PGW-C (in the case of EPS). The SMF (for 5GS) may include the information when it transmits SM NAS messages to the UE or the SMF+PGW-C (for EPS) when it transmits SM related NAS messages to the UE via the MME.

The USS may also provide the UE with information about the new UAV-C, including the UAV-C's Application Layer ID (which may be interpreted as User Info or Pilot Info), Layer-2 ID, etc. when changing from a UAV-C to another UAV-C or from a TPAE to a UAV-C. When changing to a TPAE, information about the TPAE may be provided to the UE, including, for example, the Application Layer ID of the TPAE (which may be interpreted as User Info or Pilot Info or Officer Info), Layer-2 ID, etc.

The UE may form a PC5 unicast link for C2 connection with the new UAV-C or TPAE based on the information includeed in the SM NAS message received from the SMF or the SM-related NAS message to the UE from the network/MME. It may also release the PC5 unicast link for an existing C2 connection.

In operations a) and b) above, the procedures/actions related to C2 communication via Uu may be skipped if they are not required.

### 4. The fourth example of the present disclosure

An example in which the core network provides the base station with the information whether C2 communication via PC5 is authorized or not in case of failure or revocation of C2 communication authorization (or authorization with USS/network) via Uu is described.

When C2 communication authorization over Uu fails (i.e., is not successful), or when the Uu-based C2 connection is revoked, or when the PDU Session/QoS Flow used for Uu-based C2 communication is released, or when the PDN connection/bearer used for Uu-based C2 communication is released, the Core Network may provide one or more of the following information to the base station Such information may be provided in various forms, including combinations, explicit, implicit, etc:
(A) information related to that PC5-based C2 communication is not authorized
(B) information related to that PC5-based C2 communications are not permitted
(C) information requesting that resources not be allocated for PC5-based C2 communications. The resource may be a radio resource.

The UE associated with the above information is assumed to be a UAV. However, this is for illustrative purposes only and the UE associated with the above information could be a UAV-C or both a UAV and a UAV-C.

The method by which the Core Network provides the above information (e.g., one or more of (A) to (C)) to the Base Station may be based on one or more of the following
- The SMF may include the above information in (or in the form of) an N2 message/information and transmit it to the base station via the AMF.
- The SMF provides the information to the AMF, which transmits it to the base station. The provision of the above information by the SMF to the AMF may also be in the form of an event notification.
- The SMF+PGW-C provides the above information to the MME, which may transmit it to the base station.
- The SMF requests the UDM to provide the above information or to notify the AMF of the above information. The UDM then provides/notifies the AMF of the above information, which the AMF may transmit to the base station. In this case, the UDM may also provide/notify the AMF of the information for the UE's counterpart UE (i.e. UAV-C if the UE is a UAV, or UAV if the UE is a UAV-C) so that the AMF can transmit it to the base station. The information about the UE's neighbouring UE may be based on subscriber information.

When the base station receives the above information from the Core Network, the base station may decide not to allocate/provide the radio resource required for PC5-based C2 communication (or PC5 communication, Direct communication) for the UE in question.

In the first to fourth examples of the present disclosure, which were previously described based on various examples, an approach to support C2 communication using a PC5 interface was described in connection with performing Uu-based C2 communication authorization. The description of the present disclosure with respect to C2 communication using the PC5 interface may also be applied to the case where Uu-based C2 communication re-authorization is performed.

In Examples 1 to 4 of the present disclosure, which have been previously described with reference to various examples, the operations associated with PC5-based C2 communication may also be interpreted to include PC5 operations for performing such operations or other PC5 operations associated therewith (e.g., direct discovery).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

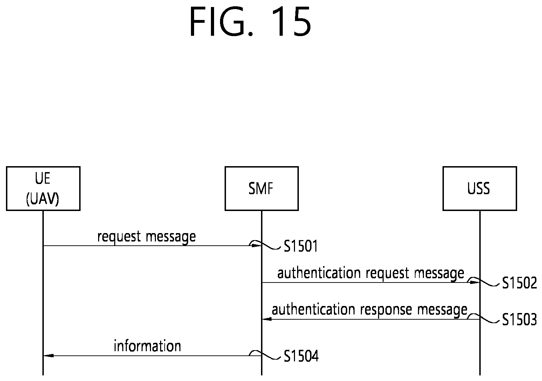

**FIG. 15** **illustrates an example of a procedure according to one embodiment of the present disclosure.**

Note that the procedure illustrated in FIG. 15 is illustrative only, and the scope of the present disclosure is not limited by the example in FIG. 15. For example, the UE, SMF, and USS illustrated in FIG. 15 may perform the operations described in the example of FIG. 1 or the example of FIG. 14. Of note, AMF, UPF, PCF, UDM, NEF, PGW-U, SMF+PGW-C, PGW-C, MME, SGW, DN, UAS NF, etc. are not shown in the examples of FIG. 15, but this is for illustrative purposes only. That is, the AMF, UPF, PCF, UDM, NEF, PGW-U, SMF+PGW-C, PGW-C, MME, SGW, DN, UAS NF, etc. may perform the operations described in the various examples of the present disclosure, even in embodiments based on FIG. 15.

For example, for the example of FIG. 15, the operations described in the examples of FIGS. 1 to 14 may also be applied. For example, even if the behaviour, content, etc. is not directly illustrated in the example of FIG. 15, the behaviour, content, etc. illustrated in the various examples of the present disclosure may be applied.

In step S1501, the UE (e.g., UAV) may send a request message to the SMF. For example, the UE may request authorization for direct C2 communication with the UAV-C. For example, the request message sent by the UE may include information that it is requesting authorization for direct C2 communication. For example, the authorization request message may include C2 aviation payload information, which may include information that the information is authorization for direct C2 communication.

In step S1502, the SMF may send an authorization request message to the USS. For example, the SMF may send an authorization-related message to the USS via the UAS NF/NEF. The authorization request message sent by the SMF may be, for example, an Nnef_Authentication_AuthenticateAuthorize message. The SMF sends this request message to the UAS NF/NEF, which may generate the request message into a Naf_ Authentication_AuthenticateAuthorize request message and send it to the USS.

In step S1503, the USS transmit send an authorization response message to the SMF. Here, the authorization response message may be, for example, a Naf_Authentication_AuthenticateAuthorize response message. If the USS has successfully performed direct C2 authorization, the USS may send an authorization response message to the SMF including the application layer ID of the UAV-C. The application layer ID of the UAV-C may be passed to the UE. For example, the Naf_Authentication_AuthenticateAuthorize response message sent by the USS may include a C2 authorization payload, which may include the direct C2 pairing information. The C2 pairing information may include the application layer identity of the UAV-C.

The SMF may transmit the application layer ID of the UAV to the UE.

If the USS fails direct C2 authorization, the USS may send a response message to the SMF including information that direct C2 authorization failed. In this case, the SMF may send information to the UE informing it not to perform C2 communication based on PC5.

In step S1504, the SMF may transmit information to the UE. For example, the SMF may transmit the application layer ID of the UAV-C to the UE. The UE may configure the application layer ID of the UAV-C to the target user information. For example, the UE may configure the application layer ID of the UAV-C to the target user information and send a direct communication request message comprising the target user information to another UE (e.g., the UAV-C). This enables the UE to establish C2 communication with the UAV-C via the PC5 reference point with the UAV-C.

According to one embodiment of the present disclosure, in connection with setting whether to allow PC5-based C2 communication based on the result of Uu-based C2 communication authorization, the following example behaviour may be performed. For example, based on the result of the Uu-based C2 communication authorization (or authorization with the USS/network), the UE may be instructed and/or set whether it is allowed to perform the PC5-based C2 communication. For example, the UE may perform the Uu-based C2 communication authorization (or authorization with the USS/network) before performing the PC5-based C2 communication. For example, based on the outcome (i.e., success or failure) of the Uu-based C2 communication authorization and the instruction/setting information on whether the UE is allowed to perform the PC5-based C2 communication, the UE may determine whether it is allowed to perform the PC5-based C2 communication.

According to one embodiment of the present disclosure, in connection with setting whether PC5-based C2 communication is allowed in response to performing Uu-based C2 communication revocation, the following example behaviours may be performed. For example, in performing the Uu-based C2 communication revocation, the UE may be instructed or set whether or not it is allowed to perform the PC5-based C2 communication. For example, a Uu-based C2 communication revocation may be performed. For example, based on the indication/setting information on whether or not a PC5 based C2 communication can be performed, the UE may determine whether or not a PC5 based C2 communication can be performed/continued.

According to various examples of the present disclosure, the present disclosure can have a variety of effects. For example, authorization to perform C2 communication between a UAV and a UAV-C may be effectively performed. For example, the UAV may perform direct C2 communication by receiving information for direct C2 communication from the network through a C2 communication authorization procedure via Uu, i.e., information for forming a PC5 unicast link with the UAV-C. For example, if C2 communication via PC5 is authorized through the C2 communication authorization procedure via Uu (i.e., by performing authorization with the USS/network), C2 communication via PC5 can be prevented from being performed if the C2 communication authorization procedure via Uu fails.

The effects that may be derived from the specific examples of the present disclosure are not limited to those listed above. For example, there may be a variety of technical effects that a person having ordinary skill in the related art would understand or infer from the present disclosure. Accordingly, the specific effects of the present disclosure are not limited to those expressly described herein, but may include a variety of effects that may be understood or induced from the technical features of the present disclosure.

For reference, the operation of the terminal (e.g., UE, UAV, UAV-C, etc.) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202. The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, USS, UDM, NEF, PGW-U, SMF+PGW-C, PGW-C, MME, SGW, DN, UAS NF, etc.) or base station (e.g., (R)AN, NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for preforming communication, the method performed by a Session Management Function (SMF), and comprising:
receiving information for requesting authorization for direct Command and Control (C2) communication from the User Equipment (UE),
transmitting authorization request message to the Uncrewed Aerial System (UAS) Service Supplier (USS); and
receiving an application layer ID of an Uncrewed Aerial Vehicle (UAV) controller (UAV-C) from the USS, based on that authorization for direct C2 communication is successful; and
transmitting the application layer ID of the UAV-C to the UE.

2. The method of claim 1,
wherein the application layer ID of the UAV-C is used by the UE to establish a unicast link based on PC5.

3. The method of claim 2,
wherein the application layer ID of the UAV-C is set to Target User Info.

4. The method of claim 3,
wherein a direct communication request message including the target user information is transmitted by the UE.

5. The method of any one of claims 1 to 4,
wherein the application layer ID of the UAV-C is included in direct C2 pairing information.

6. The method of claim 5,
wherein the direct C2 pairing information is included in a Naf_Authentication_AuthenticateAuthorize response message transmitted by the USS.

7. The method of any one of claims 1 to 6,
wherein the direct C2 communication refers to a direct C2 link established via a PC5 reference point between the UAV controller and the UAV.

8. The method of any one of claims 1 to 7,
based on that the authorization for the direct C2 communication fails, information related to informing not to perform the direct C2 communication to the UE.

9. A Session Management Function (SMF) configured to operate in a wireless communication system, the SMF comprising:
one or more transmitters and receivers;
one or more processors; and
one or more memories operably connectable to the at least one processor and storing instructions that, based on being executed by the at least one processor, perform operations comprising: the method of any one of claims 1 to 8.

10. A method for performing communication, the method performed by a User Equipment (UE), and comprising:
transmitting authorization request information for direct Command and Control (C2) communications to a Session Management Function (SMF),
wherein the authorization request information is used by the SMF to transmit an authorization request message to an Uncrewed Aerial System (UAS) Service Supplier (USS); and
receiving an application layer ID of the Uncrewed Aerial Vehicle (UAV) controller (UAV-C) from the SMF,
wherein the application layer ID of the UAV-C is transmitted by the USS to the UE via the SMF, based on authorization for the direct C2 communication is successful.

11. The method of claim 10, further comprising:
establishing a unicast link based on PC5, based on the application layer ID of the UAV-C.

12. The method of claims 11, further comprising:
transmitting a direct communication request message including the target user information set to the application layer ID of the UAV-C to the UAV-C.

13. The method of any one of claims 10 to 12,
wherein the direct C2 communication refers to a direct C2 link established via a PC5 reference point between the UAV controller and the UAV.

14. The method of any one of claims 10 to 13, further comprising:
receiving information related to informing not to perform the direct C2 communication from the SMF.

15. A user equipment (UE) configured to operate in a wireless communication system, the UE comprising:
one or more transceivers;
one or more processors; and
one or more memories operably connectable to the at least one processor and storing instructions that, based on being executed by the at least one processor, perform operations comprising: the method of claims 10 to 14.

16. An apparatus in mobile communication,
at least one processor; and
at least one memory operably connectable to the at least one processor and storing instructions that, based on being executed by the at least one processor, perform operations comprising:
transmitting authorization request information for direct Command and Control (C2) communications to a Session Management Function (SMF),
wherein the authorization request information is used by the SMF to transmit an authorization request message to an Uncrewed Aerial System (UAS) Service Supplier (USS); and
receiving an application layer ID of the Uncrewed Aerial Vehicle (UAV) controller (UAV-C) from the SMF,
wherein the application layer ID of the UAV-C is transmitted by the USS to the UE via the SMF, based on authorization for the direct C2 communication is successful.

17. A non-transitory computer readable medium on which instructions are recorded,
the instructions, when executed by one or more processors, causing the one or more processors to A non-transitory Computer Readable Medium (CRM) storing instructions, based on that the instructions being executed by at least one processor, enables the at least one processor to perform operations comprising:
transmitting authorization request information for direct Command and Control (C2) communications to a Session Management Function (SMF),
wherein the authorization request information is used by the SMF to transmit an authorization request message to an Uncrewed Aerial System (UAS) Service Supplier (USS); and
receiving an application layer ID of the Uncrewed Aerial Vehicle (UAV) controller (UAV-C) from the SMF,
wherein the application layer ID of the UAV-C is transmitted by the USS to the UE via the SMF, based on authorization for the direct C2 communication is successful.
